# EUROPÄISCHE PATENTSCHRIFT

(11) **EP 2 087 257 B1**
(45) Veröffentlichungstag und Bekanntmachung des Hinweises auf die Patenterteilung: **19.01.2011**
(21) Anmeldenummer: 07822175.1
(22) Anmeldetag: 05.11.2007
(51) Int. Cl.: F16H 3/00

(54) **DOPPELKUPPLUNGS-WINDUNGSGETRIEBE**
DOUBLE CLUTCH WINDING TRANSMISSION
BOÎTE DE VITESSES À ENGRENAGES À DOUBLE EMBRAYAGE

(30) Priorität: 17.11.2006 DE 102006054281
(43) Veröffentlichungstag der Anmeldung: 12.08.2009
(73) Patentinhaber: ZF Friedrichshafen AG, 88038 Friedrichshafen (DE)
(72) Erfinder: GUMPOLTSBERGER, Gerhard, 88045 Friedrichshafen (DE); RIEGER, Wolfgang, 88048 Friedrichshafen (DE)
(86) Internationale Anmeldenummer: PCT/EP2007/061846
(87) Internationale Veröffentlichungsnummer: WO 2008/058858

(56) Entgegenhaltungen:
- WO-A-94/07055
- WO-A-2006/084555
- WO-A-2007/115687
- DE-A1- 3 715 880
- DE-A1- 10 343 995
- GB-A- 2 103 316
- GB-A- 2 412 148
- US-A1- 2004 093 972
- TENBERGE P: "Double-Clutch Transmission - Power-Shiftable Winding Transmission" VDI BERICHTE, DUESSELDORF, DE, Bd. 1665, 13. März 2002 (2002-03-13), Seiten 1033-1050, XP009094673 ISSN: 0083-5560
- FRANKE R: "DAS AUTOMATISCHE DOPPELKUPPLUNGSGETRIEBE FUER SECHS ODER ACHT LASTFREI, OHNE ANTRIEBSUNTERBRECHUNG UND OHNE VERSPANNUNG SCHALTBARE GAENGE" ATZ AUTOMOBILTECHNISCHE ZEITSCHRIFT, VIEWEG PUBLISHING, WIESBADEN, DE, Bd. 101, Nr. 5, Mai 1999 (1999-05), Seiten 350-354,357, XP000828559 ISSN: 0001-2785

## Beschreibung

Die Erfindung betrifft ein Doppelkupplungs-Windungsgetriebe gemäß dem Oberbegriff des Patentanspruchs 1.

Doppelkupplungsgetriebe werden bereits in Kraftfahrzeugen als Schaltgetriebe, meist mit automatisierten Schaltsystemen, eingesetzt. Sie zeichnen sich durch nahezu zugkraftunterbrechungsfreie Gangwechsel aus. Dadurch werden komfortablere und lastwechselarme Schaltvorgänge bei einem gleichzeitig verbesserten Beschleunigungsvermögen des Fahrzeugs ermöglicht. Eine häufig verwendete Standardbauweise mit koaxialen Antriebswellen sowie ihre Funktionsweise ist beispielsweise in der DE 198 21 164 A1 beschrieben.

Darin sind zwei antriebsseitig angeordnete Kupplungen, beispielsweise nass laufende Lamellenkupplungen, jeweils über eine Getriebeeingangswelle mit einem Teilgetriebe in Vorgelegebauweise verbunden, wobei eines der Teilgetriebe die geradezahligen Vorwärtsgänge und das andere Teilgetriebe die ungeraden Vorwärtsgänge umfasst. Ein oder mehrere Rückwärtsgänge können je nach Gangzahl auf der einen oder anderen Seite angeordnet sein.

Die beiden Kupplungen sind in einer Doppelkupplung verschachtelt aufgebaut, wobei die beiden Getriebeeingangswellen koaxial zueinander angeordnet sind. Die eine Getriebeeingangswelle ist dabei als eine kürzere Hohlwelle ausgebildet, in der die andere Getriebeeingangswelle als eine längere innere Zentralwelle oder Vollwelle konzentrisch gelagert ist und aus der Hohlwelle in einem kupplungsfernen Teilbereich austritt.

Die Schaltvorgänge derartiger Getriebe erfolgen sequenziell, wobei in dem gerade nicht leistungübertragenden Teilgetriebe der jeweils nächste Gang vorgewählt ist, so dass gleichzeitig zwei Gänge eingelegt sind und durch ein überlagertes Öffnen und Schließen der beiden Kupplungen der Gangwechsel praktisch ohne Unterbrechung des Fahrzeugantriebs von einem aktuellen Gang in den nächst folgenden Zielgang übergeht.

Allgemein werden Schaltgetriebe in Kraftfahrzeugen zunehmend mit höheren Gangzahlen gebaut, um ihre Effizienz zu erhöhen und das Potenzial des Verbrennungsmotors besser auszunutzen, wobei gleichzeitig eine Verringerung der Schadstoffemissionen und des Kraftstoffverbrauchs angestrebt wird. Mittlerweile sind sechsgängige Schaltgetriebe in Personenkraftwagen weit verbreitet. Auch siebengängige Schaltgetriebe sind sowohl als herkömmliche Getriebe mit einer Kupplung, beispielsweise aus der DE 103 05 242 A1, als auch als Doppelkupplungsgetriebe mit zwei Kupplungen, beispielsweise aus der DE 103 05 241 A1 schon bekannt.

In der Regel werden Fahrzeuggetriebe mit bis zu sieben Vorwärtsgängen als Eingruppengetriebe konzipiert. Während mehrstufige Getriebeautomaten in Planetenbauweise, wie beispielsweise in der DE 10 2004 041507 A1 beschrieben, auch mit mehr als sieben Gängen gebaut werden können, sind Schaltgetriebe mit noch höheren Gangzahlen eher in Mehrgruppenbauweise realisierbar. Derzeitige Mehrgruppengetriebe sind überwiegend für Nutzkraftfahrzeuge vorgesehen. Dabei verwendet man in der Regel für bis zu sechzehn Vorwärtsgänge eine Zweigruppenbauweise mit einer Hauptgruppe und einer nachgeschalteten Bereichsgruppe sowie darüber hinaus eine Dreigruppenbauweise mit einer zusätzlich vorgeschalteten Splitgruppe.

Auch bei Doppelkupplungsgetrieben ist die Mehrgruppenbauweise bereits bekannt. Beispielsweise ist in der DE 102 32 831 A1 ein Doppelkupplungsgetriebe beschrieben, bei dem die beiden Teilgetriebe jeweils zwei Gruppengetriebe umfassen, wodurch ein 2x2x3-Vorgelegewellengetriebe mit einer Gangzahl von insgesamt zwölf Vorwärtsgängen gebildet wird.

Weiterhin sind Windungsgetriebe bekannt. Bei Windungsgetrieben verläuft der Leistungsfluss eines oder mehrerer Gänge im Wechsel über mehrere Zahnradebenen zwischen einer Hauptwelle und einer parallelen Nebenwelle bzw. Vorgelegewelle. Der Leistungsfluss "windet" sich also durch das Getriebe. Eine allgemeine Beschreibung derartiger Getriebe findet sich beispielsweise bei G. Lechner, H. Naunheimer: "Fahrzeuggetriebe, Grundlagen, Auswahl, Auslegung und Konstruktion", Springer-Verlag, Berlin, Heidelberg, 1991. Windungsgetriebe haben den Vorteil, dass sie gegenüber herkömmlichen Getrieben mit weniger Zahnradpaaren auskommen sowie relativ kompakt bauen und sich daher ebenfalls zur Konstruktion von Getrieben mit relativ vielen Gängen, so genannten Vielgang-Getrieben, anbieten. Zudem sind sie im Vergleich zu Mehrgruppengetrieben meistens mit vergleichsweise kürzeren Schaltzeiten steuerbar. Prinzipiell sind bei einem Windungsgetriebe alle Zahnräder schaltbar und eigenen Wellen zugeordnet bzw. auf Wellen drehbar gelagert, woraus sich bei "r" Zahnradebenen eine Gangzahl von z = 2^{r-1} ergibt. Dies bedeutet, dass mit drei Radebenen beispielsweise ein viergängiges Getriebe realisierbar ist und somit gegenüber einem herkömmlichen Vierganggetriebe eine Radebene eingespart ist.

Eine Kombination eines Gruppengetriebes mit einem Windungsgetriebe ist aus der DE 101 37 356 A1 bekannt. Darin ist ein Zweigruppen-VorgelegeGetriebe mit einer Hauptgruppe in Windungsbauweise und einer nachgeschalteten Bereichsgruppe beschrieben. Die Hauptgruppe umfasst drei Radsätze für Vorwärtsgänge sowie einen Wenderadsatz für einen Rückwärtsgang. Das Bereichsgetriebe weist zwei weitere Radsätze für Vorwärtsgänge auf. In dem Hauptgetriebe ist auf einer Antriebswelle der erste Radsatz angeordnet. Die beiden nächsten Radsätze sind auf einer Zwischenwelle angeordnet, die über Schaltkupplungen einerseits mit der Antriebswelle und andererseits mit einer Abtriebswelle des Bereichsgetriebes verbindbar ist. Die Vorgelegewelle ist an geeigneter Stelle im Hauptgetriebe ebenfalls über eine Schaltkupplung getrennt. Dadurch ergeben sich verschiedene Schaltkombinationen, bei denen sich der Leistungsfluss über mehrere Radebenen windet. Die ersten vier durch das Windungs-Hauptgetriebe gebildeten Gänge werden über den ersten Radsatz des Bereichsgetriebes zur Abtriebswelle geführt, vier weitere Gänge werden über den zweiten Radsatz des Bereichsgetriebes realisiert. Zudem ist ein neunter Gang als ein Direktgang ausgeführt, bei dem die Abtriebswelle über die Zwischenwelle mit der Antriebswelle gekoppelt ist.

Die Anwendung der Windungsbauweise in einem Doppelkupplungsgetriebe ist an sich aus DE 103 39 758 A1 bekannt. Die beiden Teilgetriebe sind darin ineinander verschachtelt angeordnet. Die Doppelkupplung ist in konventioneller Bauweise ausgebildet und ausgangsseitig mit einer äußeren Hohlwelle sowie mit einer inneren Vollwelle verbunden. Die Hohlwelle führt über eine erste Eingangskonstante in das erste Teilgetriebe mit den ungeraden Gängen eins, drei, fünf und sieben sowie zwei (ungeraden) Rückwärtsgangstufen. Die Vollwelle führt über eine zweite Eingangskonstante in das zweite Teilgetriebe mit den geraden Gängen zwei, vier und sechs sowie einer weiteren (geraden) Rückwärtsgangstufe.

Zur Bildung eines Direktganges, beispielsweise des sechsten Gangs, ist die Vollwelle über eine erste Schaltkupplung mit einer koaxial angeordneten Abtriebswelle koppelbar. Die erste Schaltkupplung dient zur Schaltung zweier Radsätze. Eine zweite Schaltkupplung schaltet einerseits einen Rückwärtsgang-Radsatz und ist andererseits in Richtung Getriebeausgang mit einer, von der Vollwelle durchsetzten weiteren Hohlwelle verbunden, die zwei weitere Zahnräder trägt, von denen das eine über die zweite Schaltkupplung und das andere über eine vierte, gegenüberliegend auf der Vorgelegewelle des ersten Teilgetriebes angeordnete, Schaltkupplung schaltbar ist.

Vergleichbar zur Anordnung der Getriebeeingangswellen sind die Vorgelegewellen der Teilgetriebe ebenfalls als eine äußere Hohlwelle und eine inneren Welle, die die äußere Hohlwelle durchsetzt, ausgebildet, wobei hier umgekehrt die Hohlwelle dem zweiten Teilgetriebe und die Vollwelle dem ersten Teilgetriebe zugehörig ist. Die Verbindung zwischen den Getriebeeingangswellen und den zugehörigen Vorgelegewellen ist durch je eine Eingangskonstante hergestellt. Am getriebeausgangsseitigen Ende der äußeren, hohlen Vorgelegewelle, also dem zweiten Teilgetriebe, ist eine dritte Schaltkupplung befestigt, die wahlweise ein Zahnrad des zweiten Teilgetriebes mit der äußeren Vorgelegewelle koppelt oder die äußere Vorgelegewelle mit der inneren Vorgelegewelle, d.h. mit dem ersten Teilgetriebe verbindet.

Durch die verschachtelte Anordnung der Teilgetriebe ergibt sich mit einer entsprechenden Schaltlogik für einzelne Gänge ein Leistungsfluss, der in den Teilgetrieben parallel und in Teilbereichen axial vom Abtrieb zurück in Richtung Antrieb verläuft, um nach mehreren Windungen dann schließlich wieder in Richtung Abtrieb umgelenkt zu werden. Insgesamt wird durch die bekannte Anordnung ein relativ kurzbauendes Doppelkupplungsgetriebe mit sieben Vorwärtsgängen und drei Rückwärtsgängen dargestellt, das mit insgesamt vier Schaltkupplungen schaltbar ist.

Der Schwerpunkt der DE 103 39 758 A1 liegt in der Schaffung eines Doppelkupplungsgetriebes mit mehreren, beispielsweise einer geraden und zwei ungeraden, Rückwärtsgangstufen, welches insbesondere für Nutzfahrzeuge von Vorteil ist. Darin werden auch zugkraftunterbrechungsfreie Schaltvorgänge zwischen den Rückwärtsgängen und/oder zwischen Vorwärts- und Rückwärtsgängen ermöglicht. Die Anzahl der Vorwärtsgänge ist vorzugsweise ungerade. Da der erste Gang und der höchste Gang bei ungerader Gangzahl dem gleichen Teilgetriebe angehören, kann mit Hilfe eines gewundenen ersten Ganges ein ausreichend kurzer erster Gang, also eine große Eingangsübersetzung, wie sie für Nutzfahrzeuge gefordert wird, und gleichzeitig eine hinreichend große Übersetzungs-Spreizung im größten Gang dargestellt werden.

Nachteilig daran ist, dass zwar durch die in dieser Druckschrift beschriebene Getriebestruktur zumindest ein Zahnradpaar gegenüber einer konventionellen Vorgelegebauweise eingespart werden kann. Eine Erweiterung auf eine höhere Gangzahl als sieben ist aufgrund der komplizierten und aufwendigen Konstruktion sowie des entsprechend komplizierten Leistungsflusses jedoch nicht ohne weiteres möglich. Der Fachmann findet darin auch keine Hinweise, wie ein Doppelkupplungsgetriebe mit mehr als sieben Gängen in Windungsbauweise realisiert werden kann.

Aus dem Dokument DE-A-37 15 880 ist bekannt, die Teilgetriebe eines Doppelkupplungsgetriebes als Windungsgetriebe auszubilden.

Das nicht veröffentlichte Dokument EP-A-2 002 146 zeigt ein Doppelkupplungsgetriebe mit einer Splitgruppe, einer Hauptgruppe und einer Rangegruppe. Dieses Getriebe weist ferner eine durchgehende Vorgelegewelle auf sodass jeweils maximal zwei Zahnradebenen am Leistungsfluss beteiligt sind.

Schließlich offenbart das Dokument GB-A-2 103 316 ein gattungsgemäßes 8-Gang Doppelkupplungs-Windungsgetriebe.

Vor diesem Hintergrund liegt der Erfindung die Aufgabe zugrunde ein kompakt bauendes Doppelkupplungsgetriebe in Windungsbauweise mit mehr als sieben Vorwärtsgängen zu schaffen, dass möglichst einfach im Aufbau und gleichzeitig kostengünstig ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass auf der Basis des Grundaufbaus eines Windungsgetriebes mit einzeln schaltbaren Zahnrädern auf einer Hauptwelle und einer Nebenwelle, durch geeignete Kombinationen von zumindest zwei modifizierten Grundgetrieben mit jeweils relativ geringer Gangzahl, ein einfaches Vielgang-Doppelkupplungsgetriebe in Windungsbauweise aufgebaut werden kann.

Demnach geht die Erfindung aus von Doppelkupplungs-Windungsgetriebe mit zwei Teilgetrieben mit koaxial zueinander angeordneten Getriebeeingangswellen, die mit jeweils einer Kupplung verbunden sind, mit wenigstens einer Vorgelegewelle und mit einer koaxial zu den Getriebeeingangswellen angeordneten Getriebeausgangswelle, wobei sich der Leistungsfluss wenigstens eines Ganges über mindestens zwei durch miteinander kämmende Zahnräder gebildete Zahnradebenen windet. Zur Lösung der gestellten Aufgabe sieht die Erfindung bei diesem Getriebe außerdem vor, dass die beiden Teilgetriebe als zwei hintereinander angeordnete einzelne Windungsgetriebe mit jeweils mindestens vier Vorwärtsgängen ausgebildet sind.

Im Folgenden werden auch die Begriffe "links" für "antriebsseitig", also doppelkupplungsnah, und "rechts" für "abtriebsseitig", also doppelkupplungsfern verwendet. Entsprechend wird das antriebsmotorseitige Teilgetriebe auch als linkes Teilgetriebe und das abtriebsseitige Teilgetriebe auch als rechtes Teilgetriebe bezeichnet. Weiterhin werden die Begriffe "oben" und "unten" verwendet, wobei unter "oben" die mit einer Antriebsachse fluchtende Position und unter "unten" die mit einer Vorgelegewellenachse fluchtende Position verstanden wird. Unter einer mehrteiligen Hohlwelle wird eine aus mehreren, unabhängig voneinander drehbar gelagerten koaxialen Hohlwellen oder Hohlwellensegmenten bestehende Hohlwelle verstanden.

Durch die Anordnung zweier hintereinander angeordneter Windungsgetriebe, die jeweils ein Teilgetriebe mit einer Ganggruppe bilden, kann ein kostengünstiges und konstruktiv einfaches Doppelkupplungsgetriebe mit mehr als sieben Vorwärtsgängen, beispielsweise mit acht Vorwärtsgängen, zur Verfügung gestellt werden. Ein derartiges erfindungsgemäßes Getriebe ist besonders vorteilhaft für Personenkraftfahrzeuge mit hohem Drehmoment und für Nutzfahrzeuge geeignet.

Bei einer bevorzugten Ausgestaltung eines Getriebes gemäß der Erfindung ist das erste Teilgetriebe als ein antriebsmotorseitig angeordnetes, einstufiges viergängiges Windungsgetriebe mit parallelem Antrieb und Abtrieb sowie das zweite, abtriebsseitig nachgeordnete Teilgetriebe, als ein zweistufiges viergängiges Windungsgetriebe mit koaxialem Antrieb und Abtrieb ausgebildet.

Mittels dieser beiden, in vereinfachter Windungsbauweise bauenden viergängigen Windungsgetriebe als Teilgetriebe, unter Ausnutzung der grundsätzlichen Windungsbauweise mit einzeln schaltbaren und auf Wellen drehbar gelagerten Zahnrädern, können verschiedene achtgängige Doppelkupplungsgetriebe kombiniert werden. Grundsätzlich ist die erfindungsgemäße Anordnung auch auf mehr als acht Vorwärtsgänge erweiterbar.

Eine besonders vorteilhafte Kombination kann dadurch realisiert sein, dass das erste, antriebsmotorseitig angeordnete Windungs-Teilgetriebe eine als mehrteilige Hohlwelle ausgebildete Getriebeeingangswelle aufweist, aus der eine als Vollwelle ausgebildete Getriebeeingangswelle des zweiten, abtriebsseitig angeordneten Windungs-Teilgetriebes heraustritt, und über eine als Abtriebswelle ausgebildete, eine mehrteilige Hohlwelle durchsetzende Vorgelegewelle verfügt, und dass das zweite Windungs-Teilgetriebe eine mehrteilige Hohlwelle aufweist, die antriebsseitig mit der als Vollwelle ausgebildeten Getriebeeingangswelle verbunden ist und aus der abtriebsseitig eine Getriebeausgangswelle heraustritt, und welches über eine eine mehrteilige Hohlwelle durchsetzende Vorgelegewelle verfügt, wobei letztere mit der Abtriebswelle des ersten Teilgetriebes verbunden ist.

Dabei kann in einer besonders kompakten Anordnung vorgesehen sein, dass das erste Windungs-Teilgetriebe drei der äußeren, hohlen Getriebeeingangswelle zugeordnete Zahnräder und drei der zugehörigen Vorgelegewelle zugeordnete Zahnräder aufweist, die drei Zahnradebenen bilden, wobei auf der Antriebsseite und auf der Vorgelegeseite jeweils zwei der drei Zahnräder spiegelbildlich fest miteinander gekoppelt sind und jeweils zwischen den beiden miteinander gekoppelten Zahnrädern sowie dem dritten Zahnrad jeweils ein Schaltpaket angeordnet ist.

Es ist jedoch auch möglich, dass das erste Windungs-Teilgetriebe drei der äußeren, hohlen Getriebeeingangswelle zugeordnete Zahnräder und drei der zugehörigen Vorgelegewelle zugeordnete Zahnräder aufweist, die drei Zahnradebenen bilden, wobei das rechte, doppelkupplungsferne Zahnrad auf der Vorgelegewelle als ein Festrad ausgebildet ist und zwischen den Zahnrädern jeweils ein Schaltelement angeordnet ist.

Weiterhin kann vorgesehen sein, dass das zweite Windungs-Teilgetriebe drei obere, mit der Antriebsachse fluchtende Zahnräder aufweist, wobei ein linkes doppelkupplungsnahes Zahnrad mit der inneren Getriebeeingangswelle drehfest verbunden ist, ein mittleres Zahnrad als Losrad ausgebildet ist und ein rechtes doppelkupplungsfernes Zahnrad mit der Getriebeausgangswelle verbunden ist, und dass das zweite Windungs-Teilgetriebe drei untere, mit der Vorgelegewellenachse fluchtende Zahnräder aufweist, wobei das linke doppelkupplungsnahe und das mittlere Zahnrad als Losräder und das rechte doppelkupplungsferne Zahnrad als ein Festrad ausgebildet ist, und dass die miteinander kämmenden gegenüberliegenden Zahnräder drei weitere Zahnradebenen bilden, wobei auch zwischen diesen Zahnrädern Schaltelemente angeordnet sind.

Demnach unterscheiden sich die beiden genannten Varianten im linken Teilgetriebe, wobei der Unterschied im Wesentlichen darin besteht, dass in der ersten Variante die Schaltelemente zur Schaltung der Zahnräder bzw. beteiligten Wellen als Schaltpakete und in der zweiten Variante die Schaltelemente als Einzelelemente ausgebildet und angeordnet sind. Grundsätzlich sind im rechten Teilgetriebe die Schaltelemente immer als Einzelelemente ausgebildet und angeordnet.

Dementsprechend können den Gängen beidseitig wirksame Synchronisierungen und/oder einseitig wirksame Synchronisierungen, so genannte Halbsynchronisierungen, zugeordnet sein. Stattdessen sind auch andere Kopplungselemente, beispielsweise einfache Klauenkupplungen möglich.

Die Schaltung der Synchronisierungen kann vorteilhaft von außen über Schaltgabeln oder Schaltschwingen erfolgen, die durch hydraulische, pneumatische oder elektrische Stellantriebe bewegbar sind. Möglich sind auch Schaltsysteme, die von der Wellenmitte her nach außen wirksam sind.

Vorteilhaft kann bei der Anordnung die letzte abtriebsseitige Zahnradebene des zweiten Teilgetriebes mit den beiden Festrädern auf der Getriebeausgangswelle bzw. auf der mit der Abtriebswelle des ersten Windungs-Teilgetriebes verbundenen zugehörigen Vorgelegewelle, als eine ausgangsseitige konstante Übersetzungsstufe, also als eine Abtriebskonstante, verwendet werden.

Diese Getriebekombination benötigt zur Realisierung von acht Vorwärtsgängen gemäß der Windungsbauweise somit maximal 2x3, also insgesamt lediglich sechs Zahnradebenen, welches sich kostengünstig auswirkt sowie Bauraum und Gewicht spart. Sie weist eine hohe Flexibilität in der Anordnung der einzelnen Zahnradpaare und der Wahl der Einzelübersetzungen auf, so dass sich zahlreiche Variationsmöglichkeiten zur Darstellung des Schaltschemas des Getriebes eröffnen, wobei vorzugsweise ein Kompromiss zwischen progressiver und geometrischer Getriebeabstufung, mit einer je nach Anwendung ausreichenden und für den Schaltkomfort sowie das Fahrverhalten komfortablen und für die Leistungsausnutzung des Antriebsmotors effektiven Getriebespreizung, angestrebt wird. Dabei können den beiden Getriebeeingangswellen wahlweise entweder die Zahnradpaare mit den ungeraden Gängen oder den geraden Gängen zugeordnet werden.

Da diejenigen Schaltelemente, die als Einzelelemente ausgebildet sind und die sich auf der Antriebsachse und der Vorgelegeachse genau gegenüberliegen, nicht gleichzeitig geschaltet werden dürfen, können zur Erhöhung der Schaltsicherheit sowie zur Verringerung des Betätigungsaufwandes auf die Schaltkupplungen wirksame Kopplungsmittel vorgesehen sein, die ein gleichzeitiges Schalten der entsprechenden Schaltelemente verhindern. In einer ersten Variante ist das Kopplungsmittel als eine transversal verschiebbare mechanische Verbindung zwischen den axial gleichen Außenseiten von Schiebemuffen bzw. Synchronschiebemuffen der gegenüberliegenden Schaltkupplungen ausgebildet. Gemäß einer zweiten Variante ist vorgesehen, dass das Kopplungsmittel als eine um seine Querachse drehbare mechanische Verbindung zwischen den axial entgegengesetzten Außenseiten von Schiebemuffen bzw. Synchronschiebemuffen der gegenüberliegenden Schaltkupplungen ausgebildet ist.

Außerdem kann vorgesehen sein, dass ein beliebig vorgebbarer Gang des abtriebsseitigen Teilgetriebes als ein Direktgang ausgebildet ist:
Das erfindungsgemäße Radsatzkonzept ermöglicht, die Übersetzungen so zu konzipieren, dass ein Direktgang im rechten doppelkupplungsfernen abtriebsseitigen Teilgetriebe beliebig gewählt werden kann. Zielführenderweise ist der Direktgang einer der höheren Gänge, also beispielsweise der sechste, siebte oder achte Gang. Ist der Direktgang nicht der höchste Gang, so sind die auf den Direktgang folgenden Gänge vorteilhaft als Schnellgänge ausgebildet. Je nach Direktgang unterscheiden sich die Zahnradsätze zum einen im Übersetzungsverhältnis zwischen dem linken doppelkupplungsnahen und dem rechten doppelkupplungsfernen Teilgetriebe und zusätzlich in den Übersetzungen innerhalb des rechten doppelkupplungsfernen Teilgetriebes.

In den erfindungsgemäßen Zahnradsatz können ein oder mehrere Rückwärtsgänge auf verschiedene Weise integriert werden:
Beispielsweise kann vorgesehen sein, dass wenigstens ein Zahnradsatz eines Rückwärtsganges wahlweise in dem ersten oder dem zweiten Teilgetriebe angeordnet ist, wobei der Zahnradsatz des Rückwärtsgangs zwischen zwei beliebig vorgebbaren Zahnradebenen positionierbar ist.

Der Rückwärtsgang kann beispielsweise durch eine zusätzliche (siebte) Zahnradebene mit einem Antriebsrad, einem Abtriebsrad sowie einem Rücklaufrad zur Drehrichtungsumkehr ausgeführt sein. Ein dazu angeordnetes Rückwärtsgang-Losrad kann über eine Synchronisierung mit einer geeigneten vorhandenen Welle verbunden werden, wobei zur Synchronisierung vorteilhaft eine bereits vorhandene Halbsynchronisierung zu einer Doppelsynchronisierung erweitert werden kann. Dadurch wird der nötige Bauteilaufwand für den Rückwärtsgang so gering wie möglich gehalten. Die Anordnung und die Funktion des Rückwärtsganges ist in beiden Teilgetrieben möglich. Grundsätzlich sind auch mit nur einer Rückwärtsgangstufe zwei oder mehr Rückwärtsgänge realisierbar.

Es ist auch möglich, ein Rückwärtsgang mit Hilfe eines zusätzlichen, drehrichtungumkehrenden Planetensatzes zu realisieren oder einen Elektromotor zur Rückwärtsfahrt zu verwenden.

Zur Lagerung des erfindungsgemäßen Doppelkupplungs-Windungsgetriebes sind axial zwei äußere und wenigstens eine axial innere Lagerebene angeordnet.

Die beiden axial äußeren Lagerebenen können vorteilhaft in eine vordere und eine hintere Gehäusewand eines Getriebegehäuses integriert sein. Die axial innere Lagerebene ist bevorzugt zwischen den beiden Teilgetrieben angeordnet und in das Gehäuse integriert. Es ist auch möglich, die axial innere Lagerebene als ein eigenständiges separates Bauteil, als eine so genannte Lagerbrille auszubilden. Je nach Getriebegröße und dem Betrag der kalkulierten Kräftebeanspruchung können auch weitere Lagerebenen sinnvoll sein, beispielsweise zwischen der fünften und der sechsten Zahnradebene.

Dabei kommen als Lagerelemente alle gängigen Rillenkugellager bzw. Schrägkugellager, Rollenlager bzw. Nadellager oder Kegelrollenlager in Betracht, die je nach Verteilung der auftretenden Lagerkräfte und nach konstruktiv sinnvollen Gesichtspunkten an den jeweiligen Wellenenden der Antriebs- und Abtriebswellen angeordnet werden können. Die radiale Lagerung der übrigen Wellen und Losräder des Doppelkupplungsgetriebes erfolgt vorzugsweise durch Nadellager. Zur axialen Lagerung können, soweit erforderlich, neben Rillenkugellager bzw. Schrägkugellager oder Kegelrollenlager auch Axialnadellager eingesetzt werden.

Als Doppelkupplung sind sowohl nass laufende als auch trockene laufende Kupplungen geeignet, vorzugsweise mit elektro-mechanischer oder hydraulischer Betätigung. Sinnvollerweise ist zwischen der Kurbelwelle eines Verbrennungsmotors und der Doppelkupplung ein Schwingungsdämpfer angeordnet. Dieser kann als konventioneller Torsionsschwingungsdämpfer oder als Zwei-Massen-Schwungrad ausgebildet sein. Denkbar sind jedoch auch hydraulische Dämpfer.

Das Doppelkupplungs-Windungsgetriebe gemäß der Erfindung kann vorteilhaft in moderne Fahrzeuge mit Hybridantrieb integriert werden:
Dabei kann eine elektrische Maschine grundsätzlich auf jede Welle des Getriebes wirken. Die Elektromaschine kann beispielsweise als Traktionsmaschine zum Starten des Verbrennungsmotors oder zum Antreiben des Fahrzeugs dienen. Weiterhin kann sie als Hilfsantrieb zur Synchronisierung oder zum Antrieb einer Hydraulikpumpe verwendet werden. Umgekehrt kann die Elektromaschine auch als Generator zur Rekuperation in einem Bremsenergierückgewinnungssystem oder als Hilfsbremse fungieren.

Dazu kann vorgesehen sein, die elektrische Maschine der Doppelkupplung koaxial nachzuschalten bzw. antriebstechnisch nachzuordnen oder zwischen einer antriebsseitigen zusätzlichen Kupplung und der Doppelkupplung anzuordnen, wodurch das Getriebe wahlweise mit dem Verbrennungsmotor oder der Elektromaschine verbindbar ist. Die Elektromaschine kann schließlich auch antriebsseitig oder abtriebsseitig auf einer zusätzlichen Vorgelegewelle angeordnet und über ein zusätzliches im Eingriff befindliches Zahnrad in der ersten oder sechsten Zahnradebene mit dem linken doppelkupplungsnahen oder dem rechten doppelkupplungsfernen Windungs-Teilgetriebe verbunden sein.

Zur Verdeutlichung der Erfindung ist der Beschreibung eine Zeichnung mit Ausführungsbeispielen beigefügt.

In dieser zeigt
- Fig. 1: eine schematische Darstellung eines erfindungsgemäßen acht- gängigen Doppelkupplungs-Windungsgetriebes mit zwei Win- dungs-Teilgetrieben,
- Fig. 2: einen Grundaufbau eines viergängigen Windungsgetriebes,
- Fig. 3: einen Aufbau eines einstufigen viergängigen Windungsgetrie- bes,
- Fig. 4: vier Leistungsfluss-Varianten a-d des Getriebes gemäß Fig. 3,
- Fig. 5: einen Aufbau eines zweistufigen viergängigen Windungsgetrie- bes,
- Fig. 6: vier Leistungsfluss-Varianten a-d des Getriebes gemäß Fig. 5,
- Fig. 7: eine erste schematisierte Ausführungsform eines Zahnradsatz eines achtgängigen Doppelkupplungs-Windungsgetriebes,
- Fig. 8: eine zweite schematisierte Ausführungsform eines Zahnradsat- zes gemäß des achtgängigen Doppelkupplungs-Windungsge- triebes gemäß Fig. 1,
- Fig. 9: den Zahnradsatz des Doppelkupplungs-Windungsgetriebes gemäß Fig. 1,
- Fig. 10: ein erstes tabellarisches Schaltschema mit einem sechsten Gang als Direktgang gemäß Fig. 1 und Fig. 9,
- Fig. 11: ein zweites tabellarisches Schaltschema mit einem sechsten Gang als Direktgang gemäß Fig. 1 und Fig. 9,
- Fig. 12: ein erstes tabellarisches Schaltschema mit einem siebten Gang als Direktgang gemäß Fig. 1 und Fig. 9,
- Fig. 13: ein zweites tabellarisches Schaltschema mit einem siebten Gang als Direktgang gemäß Fig. 1 und Fig. 9,
- Fig. 14: ein drittes tabellarisches Schaltschema mit einem siebten Gang als Direktgang gemäß Fig. 1 und Fig. 9,
- Fig. 15: ein viertes tabellarisches Schaltschema mit einem siebten Gang als Direktgang gemäß Fig. 1 und Fig. 9,
- Fig. 16: ein erstes tabellarisches Schaltschema mit einem achten Gang als Direktgang gemäß Fig. 1 und Fig. 9,
- Fig. 17: ein zweites tabellarisches Schaltschema mit einem achten Gang als Direktgang gemäß Fig. 1 und Fig. 9,
- Fig. 18: den Zahnradsatz von Fig. 7 mit einer transversalen Kopplung gegenüberliegender Schaltelemente,
- Fig. 19: den Zahnradsatz von Fig. 7 mit einer rotatorischen Kopplung gegenüberliegender Schaltelemente,
- Fig. 20: ein erfindungsgemäßer Zahnradsatz mit Synchronisierungspa- keten in beiden Windungs-Teilgetrieben,
- Fig. 21: den Zahnradsatz von Fig. 20 mit einer ersten alternativen Syn- chronisierung im rechten Windungsteilgetriebe,
- Fig. 22: den Zahnradsatz von Fig. 20 mit einer zweiten alternativen Synchronisierung im rechten Windungsteilgetriebe,
- Fig. 23: den Zahnradsatz von Fig. 7 mit Synchronisierungspaketen im linken Windungs-Teilgetriebe und Halbsynchronisierungen im rechten Windungs-Teilgetriebe,
- Fig. 24: den Zahnradsatz von Fig. 23 mit einer alternativen Anordnung der Halbsynchronisierungen im rechten Windungs-Teilgetriebe,
- Fig. 25: ein Zahnradsatz mit gegenüber Fig. 8 gespiegelten Zahnrad- ebenen im linken Windungs-Teilgetriebe,
- Fig. 26: den Zahnradsatz von Fig. 25 mit einer schematischen Darstel- lung dreier Lagerebenen,
- Fig. 27: den Zahnradsatz von Fig. 8 mit einem Rückwärtsgang im rech- ten Windungs-Teilgetriebe,
- Fig. 28: den Zahnradsatz von Fig. 8 mit einem Rückwärtsgang im linken Windungs-Teilgetriebe,
- Fig. 29: den Zahnradsatz von Fig. 8 mit einer alternativen Anordnung des Rückwärtsganges im rechten Windungs-Teilgetriebe,
- Fig. 30: eine erste Ausführungsform des Doppelkupplungs- Windungsgetriebes in Kombination mit einem Hybridantrieb,
- Fig. 31: eine zweite Ausführungsform des Doppelkupplungs- Windungsgetriebes in Kombination mit einem Hybridantrieb,
- Fig. 32: eine dritte Ausführungsform des Doppelkupplungs-Windungs- getriebes in Kombination mit einem Hybridantrieb, und
- Fig. 33: eine vierte Ausführungsform des Doppelkupplungs- Windungsgetriebes in Kombination mit einem Hybridantrieb.

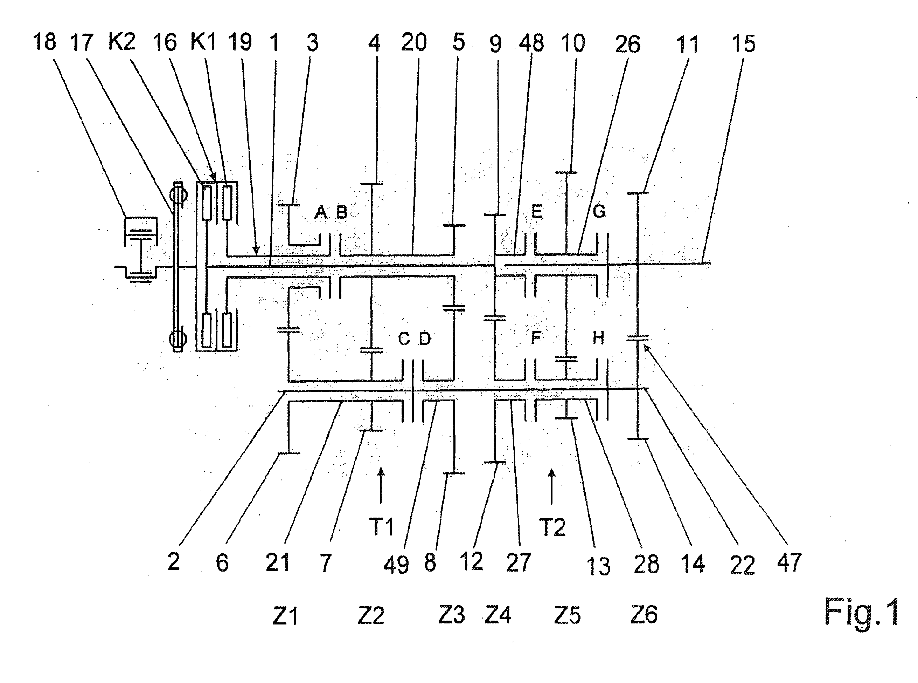

Demnach ist in Fig. 1 ein achtgängiges Doppelkupplungsgetriebe in Windungsbauweise für ein Kraftfahrzeug dargestellt, welches im Wesentlichen ein erstes motorseitiges Windungs-Teilgetriebe T1 und ein zweites abtriebsseitiges Windungs-Teilgetriebe T2 aufweist.

Das Doppelkupplungsgetriebe verfügt in an sich bekannter Weise über eine aus zwei Kupplungen K1, K2 bestehende Doppelkupplung 16, die vorteilhaft über einen Schwingungsdämpfer 17 mit einem (symbolisch durch einen Kolben mit Kurbelwelle angedeuteten) Verbrennungsmotor 18 verbindbar ist. Die Doppelkupplung 16 kann als nasse oder trockene Kupplung ausgebildet sein und ist vorzugsweise elektro-mechanisch und/oder hydraulisch betätigbar. Als Schwingungsdämpfer 17 sind sowohl konventionelle Torsions-Schwingungsdämpfer als auch Zwei-Massen-Schwungräder oder hydraulische Dämpfer geeignet.

Die eine Kupplung K1 ist mit einer als äußere Hohlwelle ausgebildeten Getriebeeingangswelle 19 verbunden, über die das motorseitige erste Teilgetriebe T1 antreibbar ist. Die andere Kupplung K2 ist mit einer konzentrisch zu der Hohlwelle 19 angeordneten Getriebeeingangswelle 1 verbunden, die als innere Zentralwelle ausgebildet ist. Über die zweite Kupplung K2 ist das abtriebsseitige zweite Teilgetriebe T2 antreibbar.

Gangwechsel erfolgen in an sich bekannter Weise durch überschneidendes Öffnen und Schließen der beiden Kupplungen K1 und K2, wobei in dem jeweils nicht aktivierten Teilgetriebe T1, T2 der sequenziell nächst folgende Gang vorgewählt ist.

Erfindungsgemäß können die beiden Ganggruppen mit den geraden Gängen zwei, vier, sechs und acht beziehungsweise mit den ungeraden Gängen eins, drei, fünf und sieben wahlweise in dem einen oder anderen Teilgetriebe T1, T2 realisiert sein.

In allen Getriebestrukturen zeigenden Figuren ist der Antrieb, also der Verbrennungsmotor, jeweils links und der Abtrieb jeweils rechts dargestellt. Entsprechend werden die Begriffe "links" und "rechts" bei der Beschreibung der Figuren verwendet. In verschiedenen Varianten der beschriebenen Grundaufbauten sind zur Vereinfachung teilweise lediglich die jeweils variierten oder zusätzlichen explizit beschriebenen Bauteile mit Bezugszeichen versehen, wobei vergleichbare Elemente der Einfachheit halber gleiche Bezugszeichen aufweisen. Weiterhin werden die Begriffe "oben" und "unten" verwendet, wobei unter "oben" die mit dem Antrieb fluchtende Position und unter "unten" eine mit einer Vorgelegewelle fluchtende Position verstanden wird.

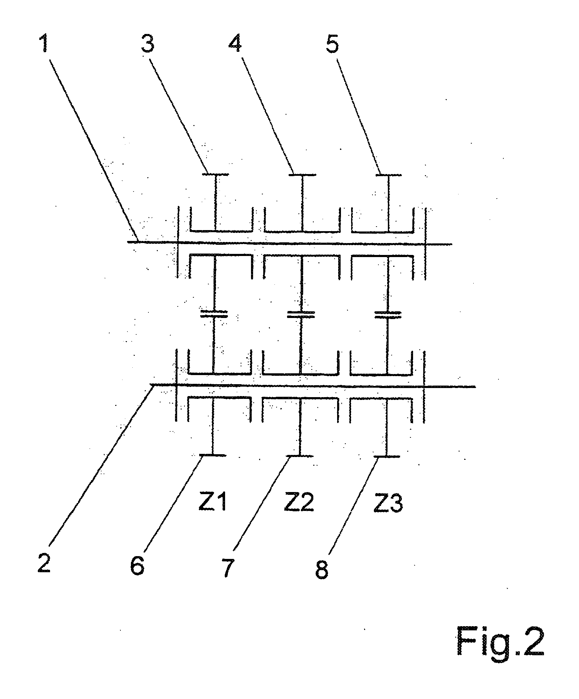

Der Aufbau eines erfindungsgemäßen Windungs-DoppelkupplungsgeTriebes, beispielsweise gemäß Fig. 1, wird im Folgenden mit Hilfe von Einzeldarstellungen in Fig. 2 bis Fig. 9 schrittweise beschrieben:

Die Fig. 2 zeigt den Grundaufbau eines viergängigen Windungsgetriebes. Auf einer Hauptwelle 1 und einer Nebenwelle 2 sind jeweils drei Zahnräder 3, 4, 5 beziehungsweise drei Zahnräder 6, 7, 8, unabhängig voneinander drehbar gelagert und einzeln schaltbar, also mit der zugehörigen Welle 1 oder 2 drehfest verbindbar. Dabei befinden sich jeweils zwei gegenüberliegende Zah n-räder 3, 6, 4, 7, 5, 8 miteinander im Zahneingriff. Diese Zahnradpaare 3/6, 4/7 bzw. 5/8 bilden jeweils eine Zahnradebene Z1, Z2 bzw. Z3.

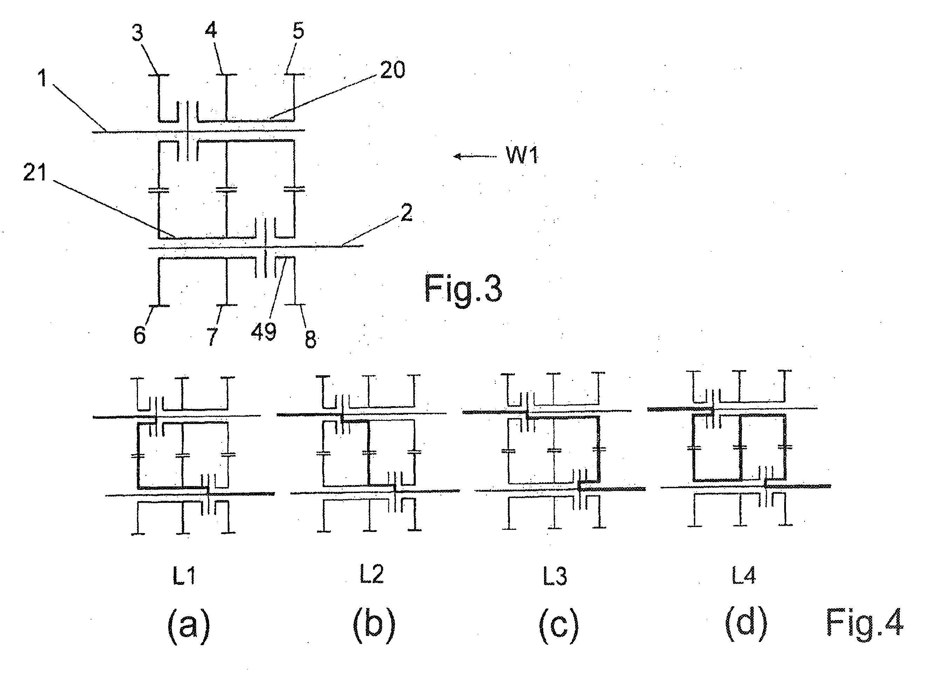

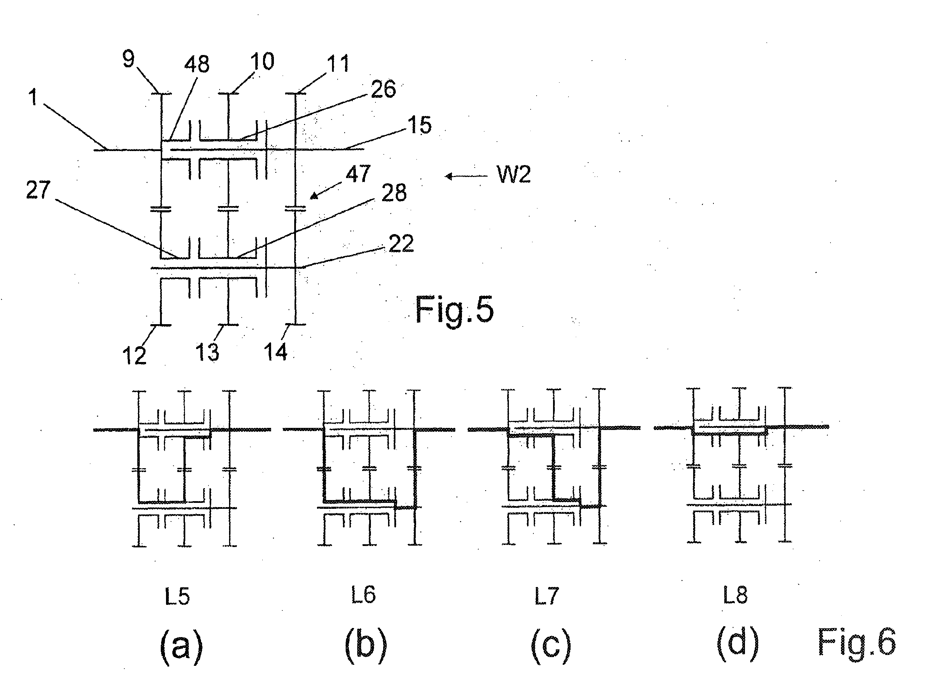

Aus diesem Grundaufbau lassen sich zwei verschiedene, gegenüber dem Grundaufbau vereinfachte, Windungsgetriebe ableiten, die in Fig. 3 und Fig. 5 dargestellt sind.

Die Fig. 3 zeigt ein einstufiges Windungsgetriebe W1 mit nicht-koaxialem Antrieb und Abtrieb. Die Zahnräder 3, 4, 5, 6, 7 und 8 sind auf den beiden Wellen 1, 2 drehbar gelagert. Die Hauptwelle 1 bildet eine Antriebswelle, die Nebenwelle 2 bzw. Vorgelegewelle bildet eine Abtriebswelle. Das mittlere Zahnrad 4 und das rechte Zahnrad 5 auf der Antriebswelle 1 sowie das linke Zahnrad 6 und das mittlere Zahnrad 7 auf der Abtriebswelle 2 sind miteinander permanent gekoppelt, beispielsweise mit je einer von der Hauptwelle 1 bzw. Nebenwelle 2 durchsetzten Hohlwelle oder je einem Hohlwellensegment 20 bzw. 21, auf dem die miteinander gekoppelten Zahnräder 4/5, 6/7 befestigt sind. Auf der Antriebswelle 1 ist somit das linke Zahnrad 3 einzeln und das mittlere Zahnrad 4 gemeinsam mit dem rechten Zahnrad 5 mit der Antriebswelle 1 verbindbar, und auf der Abtriebswelle 2 ist das linke Zahnrad 6 gemeinsam mit dem mittleren Zahnrad 7 und das rechte auf einer Hohlwelle bzw. einem Hohlwellensegment 49 sitzende Zahnrad 8 einzeln mit der Abtriebswelle 2 koppelbar.

Daraus ergeben sich vier mögliche Leistungsflüsse L1 bis L4, die in vier Teildarstellungen (a) bis (d) in Fig. 4 hervorgehoben sind. Darin wird deutlich, dass es in dem in Fig. 3 gezeigten einstufigen viergängigen Windungsgetriebe W1 (zumindest) einen Leistungsfluss L4 gibt, der sich durch das Getriebe windet, der also in der ersten Radebene Z1 nach unten, in der zweiten Zahnradebene Z2 nach oben und in der dritten Zahnradebene Z3 wieder nach unten fließt. In den anderen drei Leistungsflüssen L1, L2, L3 fließt die Leistung jeweils nur in einer Zahnradebene Z1, Z2 oder Z3 nach unten.

Die Fig. 5 zeigt ein zweistufiges Windungsgetriebe W2 mit koaxialem Anund Abtrieb. Die Antriebswelle 1 ist mit einem an einer Hohlwelle bzw. einem Hohlwellensegment 48 befestigten linken Eingangsrad 9 fest verbunden. Koaxial zu der Antriebswelle 1 ist eine Abtriebswelle 15 angeordnet, auf der ein rechtes Festrad 11 drehfest sitzt. Zwischen dem linken Zahnrad 9 und dem rechten Zahnrad 11 ist ein mittleres Losrad 10 vorgesehen, welches auf der Abtriebswelle 15 drehbar, auf einer Hohlwelle 26 bzw. einem Hohlwellensegment sitzend, gelagert ist. Das Losrad 10 ist wahlweise mit der Antriebswelle 1 oder der Abtriebswelle 15 verbindbar. Diese drei oberen Zahnräder 9, 10, 11 kämmen mit drei unteren, auf einer Nebenwelle bzw. Vorgelegewelle 22 angeordneten Zahnrädern 12, 13, 14 und bilden drei Zahnradebenen Z4, Z5, Z6 (Fig. 1), wobei das linke und das mittlere Zahnrad 12, 13 als Losräder ausgebildet sind und das rechte Zahnrad 14 fest mit der Nebenwelle 22 verbunden ist. Die beiden unteren Losräder 12, 13 sind wahlweise mit der Nebenwelle 22 drehfest verbindbar. Die beiden miteinander im Eingriff stehenden rechten Festräder 11, 14 bilden eine Abtriebskonstante 47 des Getriebes.

Die vier Leistungsflüsse L5-L8 dieses Getriebes sind in den Einzeldarstellungen (a) bis (d) der Fig. 6 verdeutlicht. Darin ist zu erkennen, dass in den drei ersten Varianten (a), (b), (c) der Leistungsfluss L5, L6, L7 über die erste oder mittlere Zahnradebene Z4, Z5 nach unten fließt und über die mittlere oder rechte Zahnradebene Z5, Z6 wieder nach oben. Lediglich der letzte in der Einzeldarstellung (d) gezeigte Leistungsfluss L8 in ist nicht gewunden, sondern ermöglicht durch eine direkte Verbindung zwischen der Antriebswelle 1 und der Abtriebswelle 15 einen Direktgang, wobei die Leistung durch das Getriebe transportiert wird ohne über Zahnräder einer Zahnradebene zu fließen.

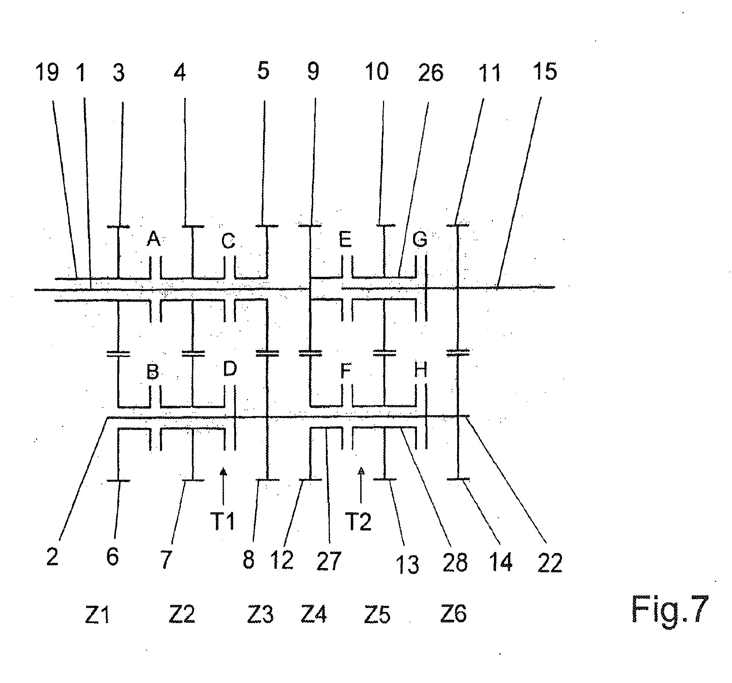

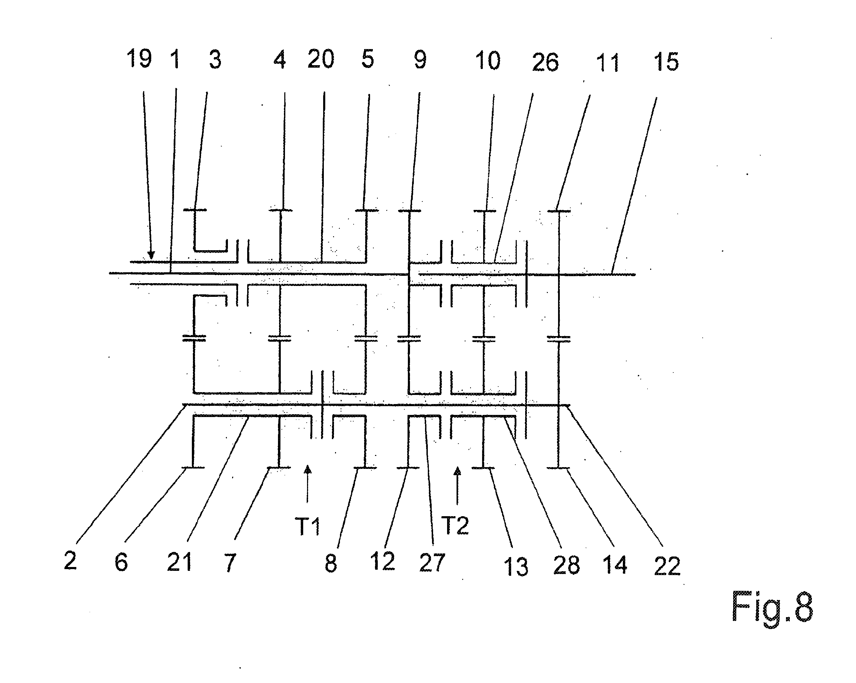

Die beiden vereinfacht dargestellten Windungsgetriebe W1 und W2 aus Fig. 3 und Fig. 5 können gemäß der Erfindung als Teilgetriebe zu verschiedenen achtgängigen Doppelkupplungsgetrieben kombiniert werden:
Ein derartiger Zahnradsatz ist in Fig. 7 und in Fig. 8 gezeigt, wobei die in Fig. 8 gezeigte Ausführungsform dem in Fig. 1 dargestellten Doppelkupplungsgetriebe entspricht. Die beiden Ausführungsformen gemäß Fig. 7 und Fig. 8 unterscheiden sich im linken Teilgetriebe 1, wobei in der ersten Ausführungsform (Fig. 7) die zur Schaltung der Gangräder 3, 4, 5, 6, 7, 8 vorgesehenen Schaltelemente A, B, C, D, beispielsweise Synchronisierungen oder Klauenkupplungen, als Einzelelemente angeordnet und ausgebildet sind, beispielsweise als so genannte Halbsynchronisierungen, während in der zweiten Ausführungsform gemäß Fig. 8 die Schaltelemente A, B, C, D paarweise als beidseitig wirksame Schaltpakete zusammengefasst sind. Die Schaltelemente E, F, G, H im rechten Teilgetriebe T2 sind jeweils als Einzelelemente ausgeführt (siehe auch Fig. 1).

Zur Anbindung des linken Teilgetriebes T1 an die zugehörige Kupplung K1, sind die - in dem einstufigen Windungsgetriebe W1 (Fig. 3) auf der Antriebswelle 1 einzeln bzw. auf dem Hohlwellensegment 20 drehbar gelagerten - Zahnräder 3, 4, 5 der äußeren, als Hohlwelle ausgebildeten Getriebeeingangswelle 19 zugeordnet. Die Hohlwelle 19 selbst ist an den Schaltstellen der Schaltelemente A, B unterbrochen ausgeführt, so dass die Zahnräder 3, 4, 5 auf zwei oder drei Hohlwellensegmenten sitzen, wobei an der bzw. an den Trennstellen der Segmente die Schaltelemente A, B je nach zu schaltendem Leistungsfluss wirksam sind.

Die innere Getriebeeingangswelle 1 durchsetzt die Hohlwelle 19 zur Anbindung der zweiten Kupplung K2 an das rechte Teilgetriebe T2, wie bereits oben anhand der Fig. 5 erläutert. Die beiden Getriebeeingangswellen 1, 19 und die koaxiale Getriebeausgangswelle 15 bilden eine Antriebsachse des kombinierten Getriebes. Weiterhin sind die Nebenwellen bzw. Vorgelegewellen 2, 22 der beiden Teilgetriebe T1, T2 miteinander verbunden, so dass der Abtrieb des linken Teilgetriebes T1 direkt mit der Abtriebskonstante 47 (Zahnräder 11 und 14) verbunden ist. Die Vorgelegewellen 2, 22 bilden eine Vorgelegeachse des Getriebes.

In Fig. 8 gehört das Hohlwellensegment 20 definitionsgemäß zu der Getriebeeingangswelle 19. Das mittlere Zahnrad 4 und das rechte Zahnrad 5 sind als Festräder auf der Hohlwelle 19 bzw. dem Hohlwellensegment 20 angeordnet. Das linke Zahnrad 3 am Getriebeeingang ist als Losrad auf der Hohlwelle 19 gelagert. Zwischen dem Losrad 3 und dem Hohlwellensegment 20 sind die Schaltelemente A, B der Fig. 7 als Paket ausgebildet und angeordnet, so dass die Getriebeeingangswelle 19 wahlweise mit dem Losrad 3 oder mit dem Hohlwellensegment 20 bzw. dem mittleren Zahnrad 4 und dem rechten Zahnrad 5 verbindbar ist.

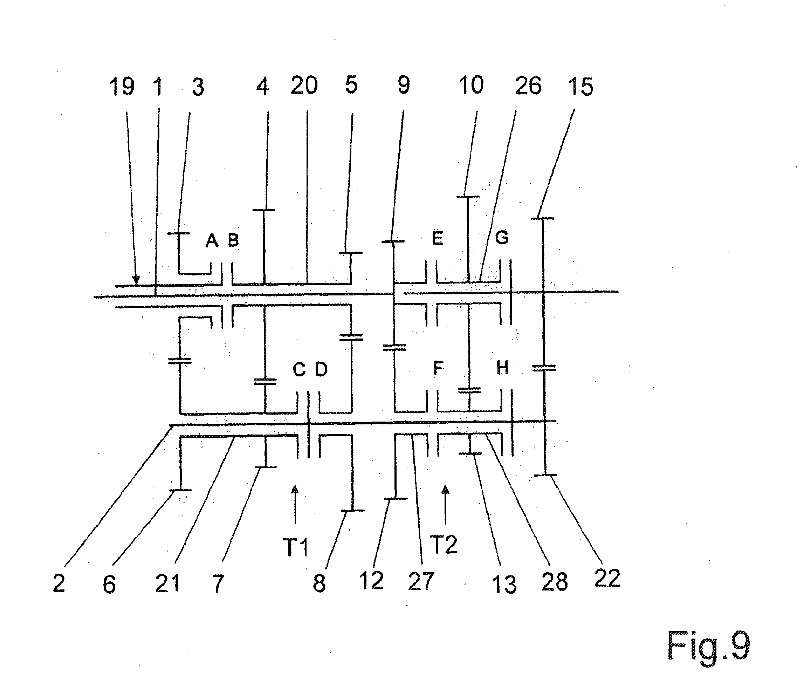

Fig. 9 zeigt die Radsatz-Anordnung von Fig. 8 und Fig. 1, wobei gegenüber den dort zur Vereinfachung gleich groß dargestellten Zahnrädern jetzt den verschiedenen Übersetzungen zur Realisierung der einzelnen Gangabstufungen angepasste Zahnradpaare mit entsprechend verschiedenen Durchmessern (Zähnezahlen) dargestellt sind. Weiterhin sind die Schaltelemente beider Teilgetriebe T1, T2 explizit mit Großbuchstaben A bis H gekennzeichnet.

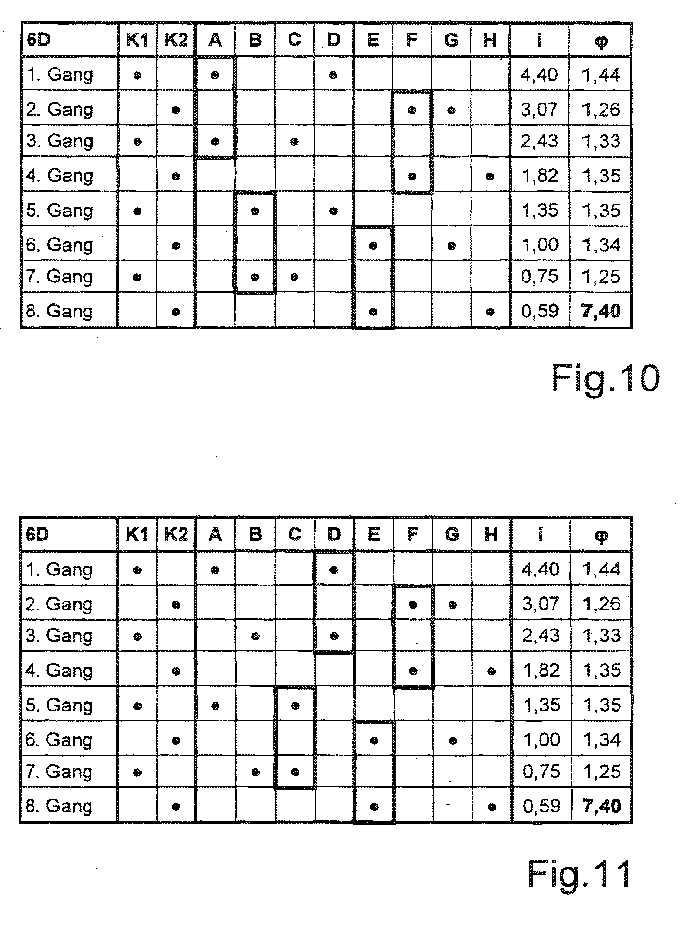

Die Anordnung der Übersetzungen des Radsatzes in Fig. 9 entspricht einem Getriebe mit acht Vorwärtsgängen, wobei der sechste Gang als ein Direktgang ausgebildet ist. Ein hierzu gehöriges Schaltschema ist in tabellarischer Form in Fig. 10 dargestellt. Weitere Schaltschemata sind in Fig. 11 bis Fig. 17 abgebildet.

In jedem Gang sind jeweils zwei der Schaltelemente A bis H ein Drehmoment weiterleitend geschaltet sowie die zugehörige Kupplung K1 oder K2 geschlossen. Dabei bilden die Gänge eins und drei, fünf und sieben, zwei und vier sowie sechs und acht vier Gruppen. Innerhalb einer Gruppe bleibt bei einem Gangwechsel das jeweils linke Schaltelement unverändert geschaltet. Die Gruppen sind in der Tabelle jeweils mit einem Rahmen hervorgehoben, so dass die jeweiligen Gruppenschaltungen zwischen den beteiligten beiden Gruppen innerhalb der Teilgetriebe leicht erkennbar sind.

Weiterhin ist in der vorletzten Tabellenspalte die jeweilige Übersetzung "i" eingetragen. Aus dem Verhältnis zwischen größter und kleinster Übersetzung ergibt sich eine Getriebespreizung "i_{ges}", die in der letzten Zeile der letzten Tabellenspalte unten (in Fettdruck) verzeichnet ist. In den darüber liegenden Zeilen der letzten Spalte ist die jeweilige Getriebeabstufung ϕ, also die Stufensprünge, zwischen den Gängen eingetragen. Die Getriebeabstufung ergibt sich aus der Vorgabe, den Antriebsmotor möglichst auf einer Kennlinie zwischen maximalem Drehmoment und maximaler Leistung zu betreiben. Bei einer rein geometrischen Abstufung wären die Stufensprünge konstant, d.h. die Differenz der Höchstgeschwindigkeiten in den Gängen vergrößert sich mit steigendem Gang. Dies wird eher bei Nutzkraftfahrzeugen angestrebt. Bei einer rein progressiven Abstufung würden die Stufensprünge mit zunehmend höheren Gängen stetig kleiner, d.h. die Differenz zwischen den Höchstgeschwindigkeiten der Gänge ist näherungsweise konstant. Dies wird eher bei Getrieben für Personenkraftfahrzeuge genutzt. Aus den in der Tabelle in Fig. 10 sowie den weiteren Schaltschemata in Fig. 11 bis Fig. 17 ersichtlichen ϕ - Werten ist erkennbar, dass die gewählte Getriebeabstufung des achtgängigen Doppelkupplungs-Windungsgetriebes ein Kompromiss zwischen geometrischer und progressiver Getriebeabstufung darstellt.

Bei dem ersten Schaltschema in Fig. 10 sind die ungeraden Gänge dem linken, doppelkupplungsnahen Teilgetriebe T1 zugeordnet. Der erste Gang ist durch die Schaltung der Schaltelemente A und D, der dritte Gang durch die Schaltelemente A und C, der fünfte Gang durch die Schaltelemente B und D und der siebte Gang durch die Schaltung der Schaltelemente B und C realisierbar. Die geraden Gänge sind dem rechten, doppelkupplungsfernen Teilgetriebe T2 zugeordnet, wobei der zweite Gang durch die Schaltelemente F und G, der vierte Gang durch die Schaltelemente F und H, der sechste Gang durch die Schaltelemente E und G und schließlich der achte Gang durch die Schaltelemente E und H einschaltbar ist. Die zugehörigen Leistungsflüsse L1 bis L8 sind in Fig. 4 und Fig. 6 hervorgehoben.

Die Einzelübersetzungen sind in diesem Schema gemäß Fig. 10 so gewählt, dass die oben erläuterte Gruppenschaltung zwischen den Schaltelementen A und B sowie zwischen den Schaltelementen E und F erfolgt. Die Übersetzungen liegen zwischen i = 4,40 und i = 0,59, woraus sich eine Spreizung von i_{ges} = 7,40 ergibt, wobei der sechste Gang mit der Übersetzung i = 1,00 als Direktgang ausgebildet ist. Die Getriebeabstufung variiert zwischen ϕ = 1,44 vom ersten zum zweiten Gang und ϕ = 1,25 vom siebten zum achten Gang.

Durch Verändern und/oder Vertauschen der Übersetzungen der Zahnradebenen Z1 bis Z6 sind weitere Schaltschemata möglich:
Bei dem Schaltschema gemäß Fig. 11 sind die erste Zahnradebene Z1 und die dritte Zahnradebene Z3 vertauscht, wodurch sich die Reihenfolge der Leistungsflüsse (Fig. 4) im dritten Gang von der Schaltung A-C zur Schaltung B-D und im fünften Gang von der Schaltung B-D zur Schaltung A-C vertauschen. Die Gruppenschaltung erfolgt hierbei zwischen den Schaltelementen C-D beziehungsweise E-F.

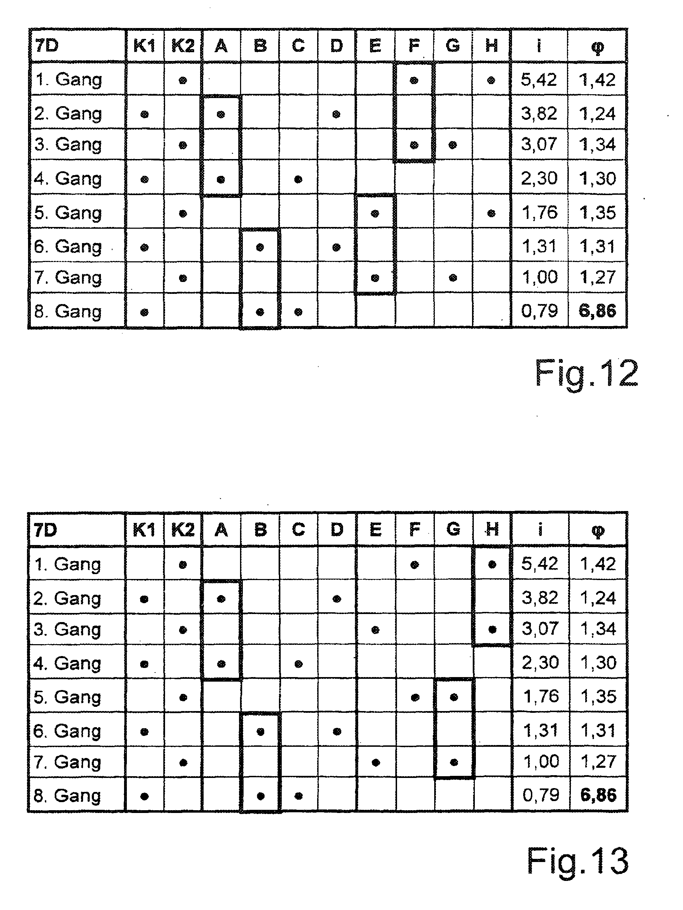

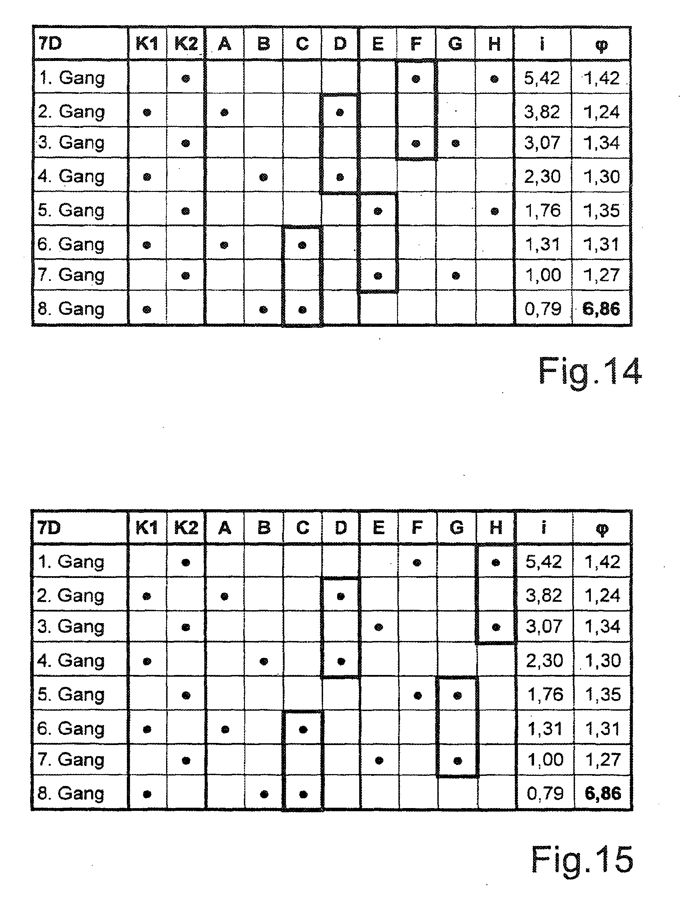

Durch die Schaltschemata von Fig. 12 bis Fig. 15 sind die verschiedenen möglichen Leistungsflüsse mit dem siebten Gang als Direktgang abgedeckt. Darin sind die ungeraden Gänge der zweiten Kupplung K2 beziehungsweise dem zweiten Teilgetriebe T2 und die geraden Gänge der ersten Kupplung K1 beziehungsweise dem ersten Teilgetriebe T1 zugeordnet. In den Schaltschemata sind der dritte Gang und der fünfte Gang beziehungsweise der vierte Gang und der sechste Gang vertauscht. Entsprechend ändern sich die Leistungsflüsse im linken Teilgetriebe T1 (Fig. 4) und im rechten Teilgetriebe T2 (Fig. 6). Die Spreizung dieses Getriebes beträgt i_{ges} = 6,86 mit Stufensprüngen zwischen ϕ = 1,42 und ϕ = 1,27. Im Einzelnen erfolgen die Gruppenschaltungen zwischen den Schaltelementen A-B beziehungsweise E-F (Fig. 12), A-B beziehungsweise G-H (Fig. 13), C-D beziehungsweise E-F (Fig. 14) sowie C-D beziehungsweise G-H (Fig. 15).

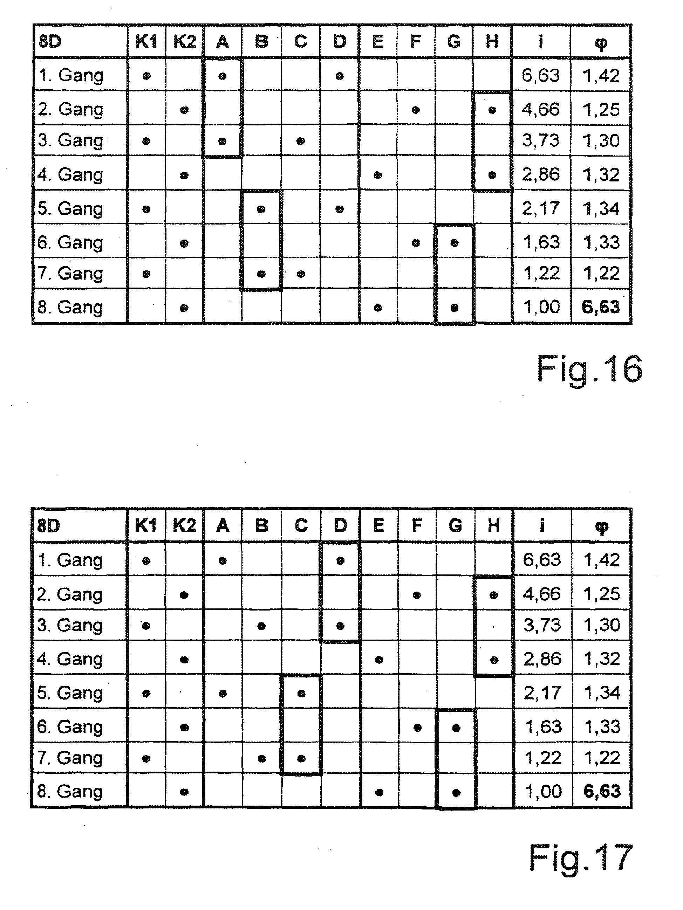

Zwei weitere Schaltschemata zeigen Fig. 16 und Fig. 17. Darin ist ein Getriebe mit dem achten Gang als Direktgang und einer Spreizung von i_{ges} = 6,63 mit Stufensprüngen zwischen ϕ = 1,42 und ϕ = 1,22 konzipiert. Die ungeraden Gänge sind dabei wie in den Varianten mit dem sechsten Gang als Direktgang (Fig. 10, Fig. 11) über die erste Kupplung K1 schaltbar, wobei wiederum die erste und die dritte Radebene vertauscht sind. Die Einzelübersetzungen sind hierbei so gewählt, dass die Gruppenschaltungen zwischen A-B bzw. G-H (Fig.16) oder zwischen C-D bzw. G-H (Fig. 17) erfolgen.

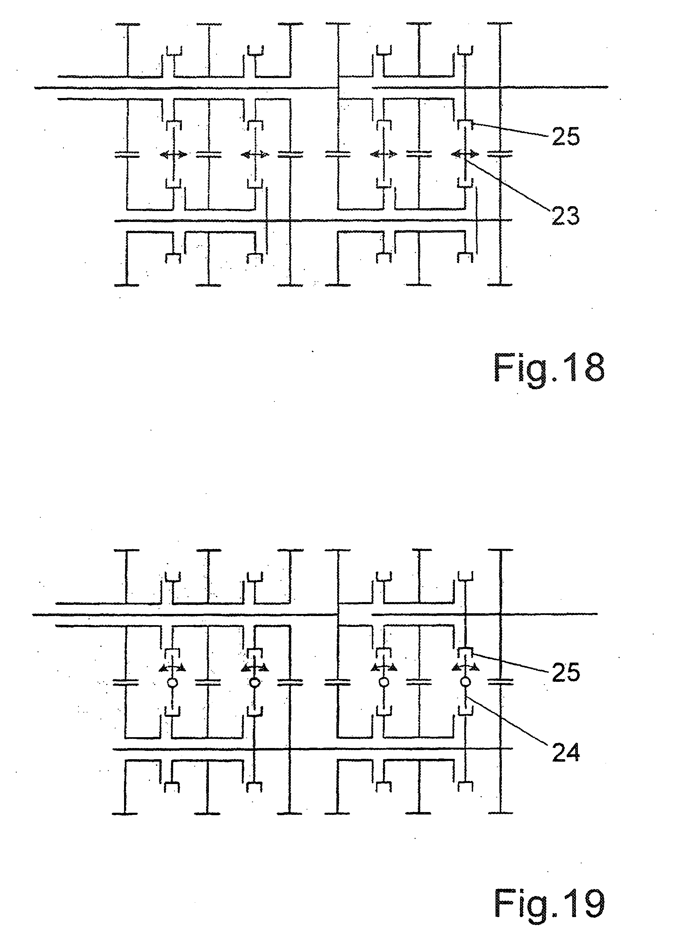

Aus den verschiedenen möglichen Leistungsflüssen L1 bis L8 und den Schaltschemata folgt, dass als Einzelelemente angeordneten Schaltelemente A bis H, die sich auf der Antriebsachse und der Vorgelegeachse gegenüberliegen, nicht gleichzeitig geschaltet sein dürfen. Um dies sicherzustellen, sind vorteilhaft mechanische Kopplungsmittel 23 oder 24 vorgesehen, durch die jeweils nur eines der gegenüberliegenden Schaltelemente A bis H betätigbar ist. Zwei verschiedene mechanische Kopplungsmöglichkeiten sind in Fig. 18 beziehungsweise Fig. 19 dargestellt, wobei dieses in Fig. 18 durch transversal bewegliche Koppelelemente 23 und in Fig. 19 durch drehbare Koppelelemente 24, die mit den entsprechenden Schiebemuffen 25 der Synchronisierungen gekoppelt sind, realisiert ist. Die jeweilige Bewegungsrichtung ist durch Doppelpfeile verdeutlicht.

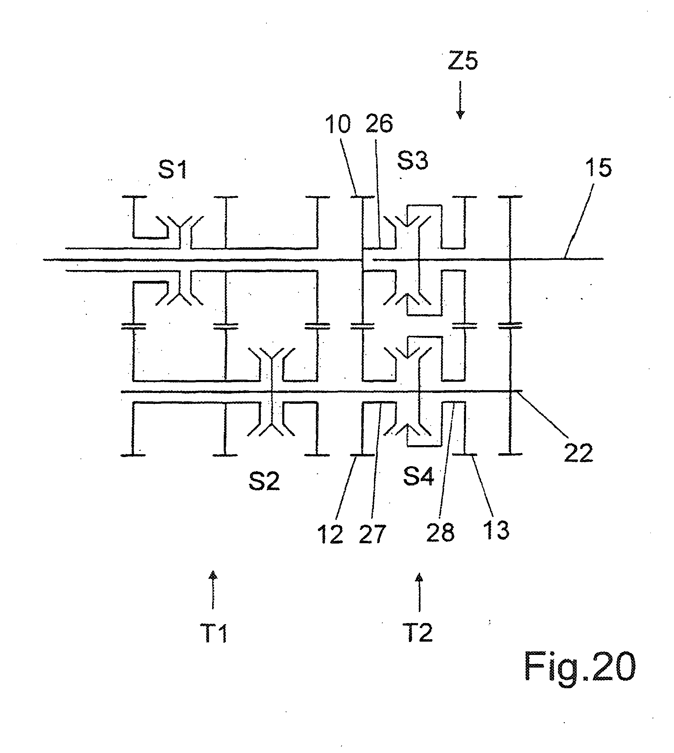

In Fig. 20, Fig. 21, Fig. 22, Fig. 23 und Fig. 24 sind verschiedene Synchronisierungs-Anordnungen dargestellt. Darin sind im linken Teilgetriebe T1 auf der Antriebsachse und der Vorgelegeachse jeweils ein Synchronisierungspakete S1 und S2 vorgesehen. In Fig. 20, Fig. 21 und Fig. 22 sind auch im rechten Teilgetriebe T2 Synchronisierungspakete S3, S4 angeordnet, wobei jedoch die Anbindung an die jeweilige (nicht dargestellte) Schiebemuffe von außen erfolgt.

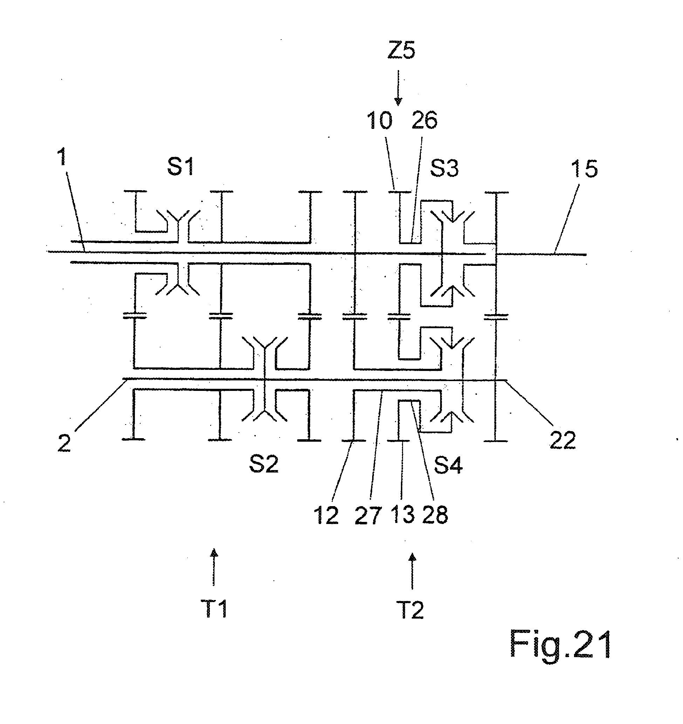

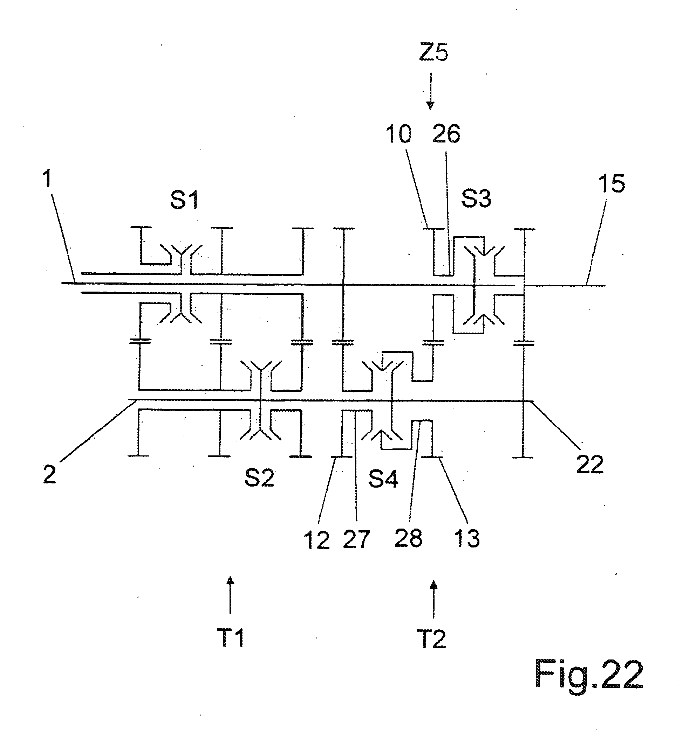

Die Synchronisierungen S3 und S4 sind hierbei so ausgeführt, dass es eine Schaltstellung gibt, in der jeweils alle drei beteiligten Wellen, also die Getriebeeingangswelle 1, die Abtriebswelle 15 und das auf der Hohlwelle 26 sitzende zentrale Losrad 10 auf der Antriebsachse sowie die Vorgelegewelle 2/22, das auf der Hohlwelle 27 sitzende linke Losrad 12 und das auf der Hohlwelle 28 sitzende zentrale Losrad 13 auf der Vorgelegeachse miteinander verbindbar sind. Dabei können die Synchronisierungen S3 und S4 beide links der zentralen Losradebene Z5, wie in Fig. 20, beide rechts der Losradebene Z5, wie in Fig. 21 oder rechts beziehungsweise links, wie in Fig. 22, angeordnet sein.

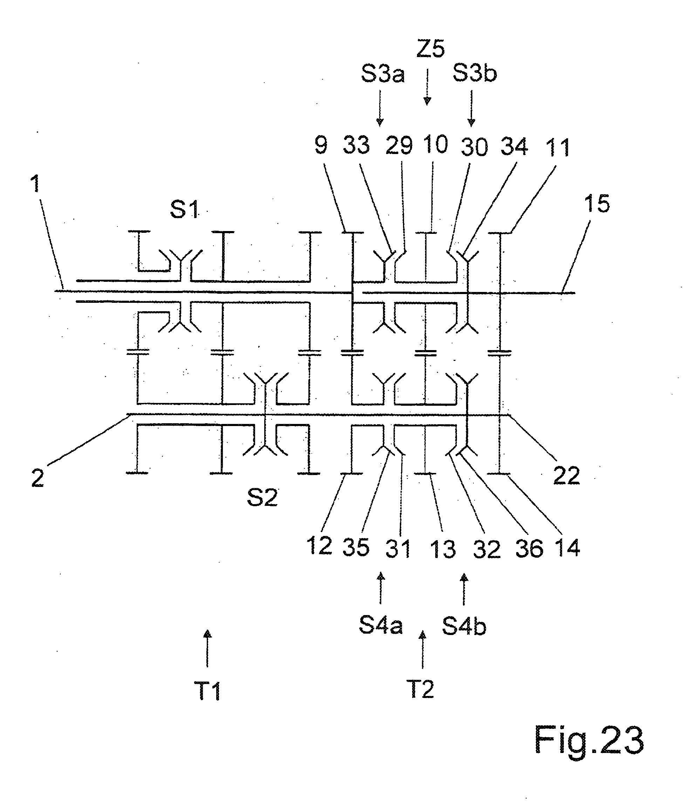

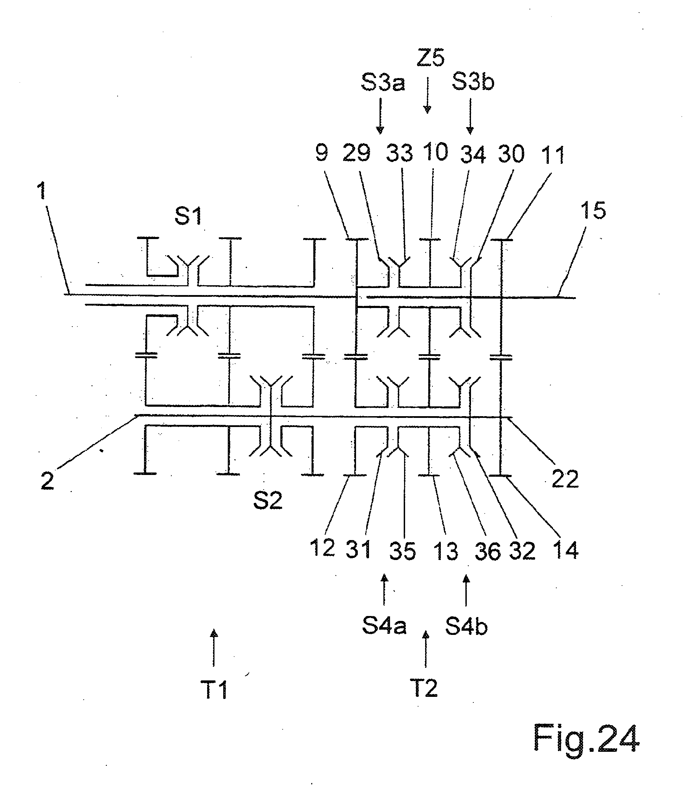

Sind die Synchronisierungen im rechten Teilgetriebe T2 nicht als Pakete sondern wie in Fig. 23 und Fig. 24 als einseitig wirksame, so genannte Halbsynchronisierungen S3a, S3b, S4a, S4b ausgebildet, so können die entsprechenden Kupplungskörper 29, 30, 31, 32 entweder an der zentralen fünften Zahnradebene Z5 jeweils rechts und links des Losrades 10, 13 und die zugehörigen Synchronkörper 33, 34, 35, 36 auf dem angrenzenden Zahnrad 9, 11, 12, 14 angebracht sein, wie in Fig. 23 dargestellt oder umgekehrt wie in Fig. 24 gezeigt.

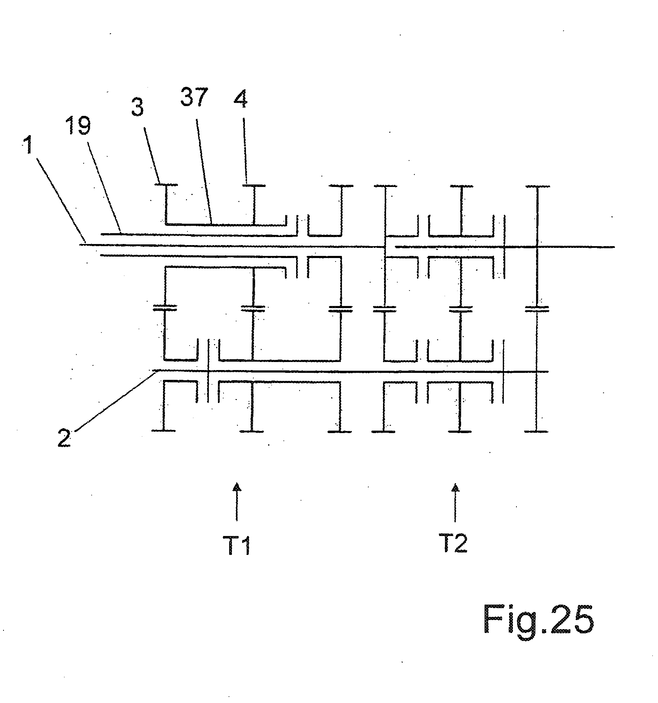

Die Fig. 25 zeigt eine Spiegelung des linken Teilgetriebes T1. Dabei sind das linke Zahnrad 3 und das mittlere Zahnrad 4 auf einer Hohlwelle 37 angeordnet, die auf der Getriebeeingangs-Hohlwelle 19 drehbar gelagert ist.

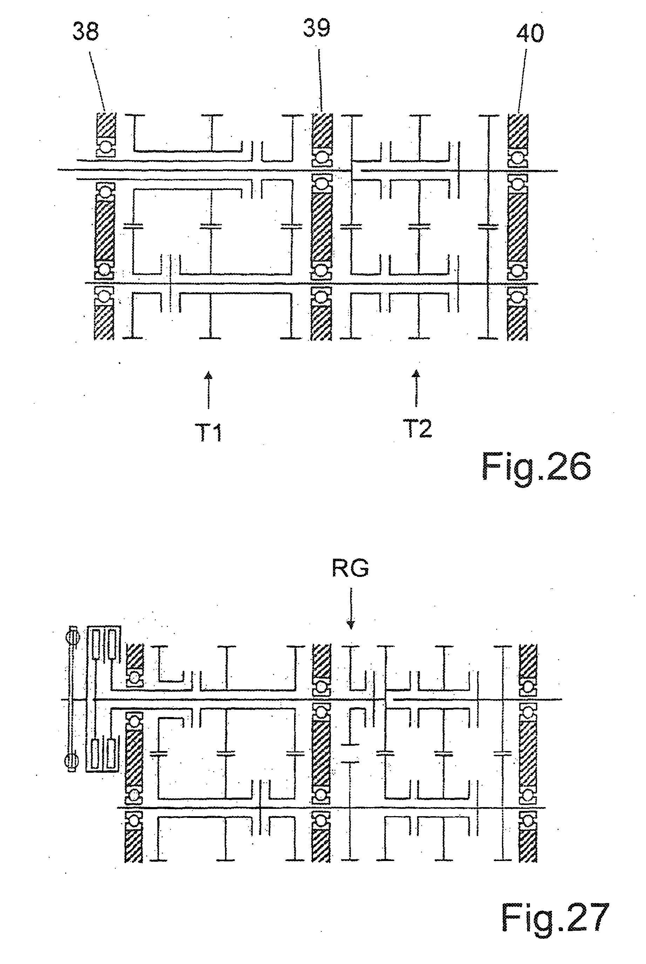

Diese Radsatz-Anordnung ist auch beispielhaft in der Fig. 26 verwendet, die drei Lagerebenen 38, 39, 40 zeigt, wobei die linke Lagerebene 38 integraler Bestandteil einer vorderen, doppelkupplungsnahen Gehäusewand und die rechte Lagerebene 40 integraler Bestandteil einer hinteren, doppelkupplungsfernen Gehäusewand eines nur angedeuteten Getriebegehäuses sind. Die mittlere Lagerebene 39 ist zwischen den beiden Teilgetrieben T1, T2 angeordnet und vorteilhaft ebenfalls als ein Bestandteil des Getriebegehäuses ausgebildet. Als Lager sind je nach Konstruktion und Lagerkräften hier nicht weiter erläuterte marktübliche Rollen-, Kugel-, Kegel- oder Nadellager geeignet.

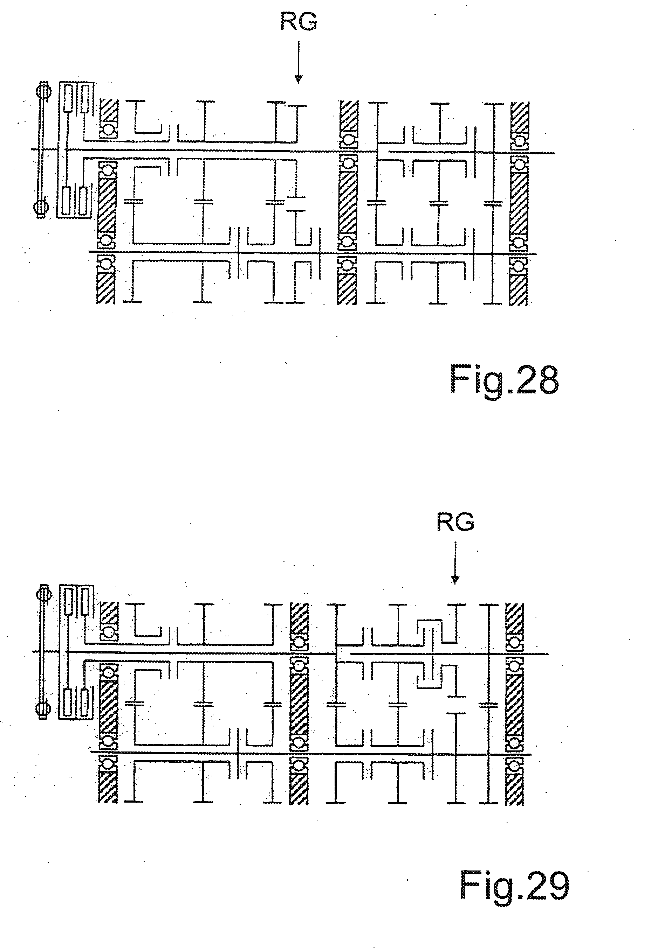

Zur Vervollständigung des Getriebes sind in Fig. 27, Fig. 28 und Fig. 29 verschiedene Anordnungen eines Rückwärtsganges RG dargestellt. Der Rückwärtsgang RG ist durch eine zusätzliche Zahnradebene realisiert. Er kann beispielsweise im rechten Teilgetriebe T2 als vorgelagerte Zahnradebene mit einer zusätzlichen Halbsynchronisierung (Fig. 27) oder als eine nachgelagerte Zahnradebene im linken Teilgetriebe T1 mit einer zusätzlichen Halbsynchronisierung (Fig. 28) oder als eine zentrale Zahnradebene im rechten Teilgetriebe T2 unter Nutzung einer vorhandenen Halbsynchronisierung (Fig. 29) realisiert sein.

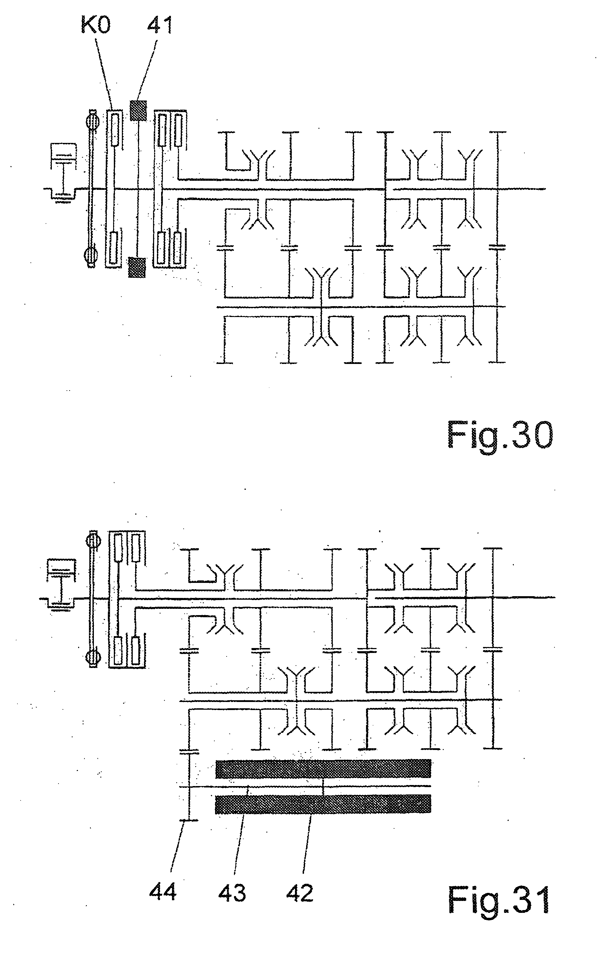

Schließlich ist in den Figuren 30 bis 33 eine Einbindung des Doppelkupplungs-Windungsgetriebes gemäß der Erfindung in einen Hybridantrieb eines Fahrzeuges dargestellt. Darin ist eine elektrische Maschine 41, 42, 46 schematisch dargestellt, die zum Starten des Verbrennungsmotors 18 und/oder zum Antreiben des Getriebes und/oder als Generator zur Bremsenergierückgewinnung betrieben werden kann.

Fig. 30 zeigt eine Ausführungsform, bei der die elektrische Maschine 41 zwischen einer zusätzlichen antriebsseitigen Kupplung K0 und der Doppelkupplung 16 angeordnet ist und auf das Eingangsbauteil der Doppelkupplung wirkt. Mittels der zusätzlichen antriebsseitigen Kupplung K0 kann das Getriebe wahlweise mit dem Verbrennungsmotor 18 oder mit der elektrischen Maschine 41 verbunden werden.

In der Fig. 31 ist die elektrische Maschine 42 in einer so genannten "Stabläufer"-Bauweise ausgebildet und ihr Rotor auf einer zusätzlichen Nebenwelle 43 gelagert. Die Nebenwelle 43 ist über ein Zahnrad 44 der ersten Zahnradebene Z1, das mit dem linken Losrad 6 der Vorgelegeachse im Eingriff steht, antriebsseitig mit dem Getriebe verbunden.

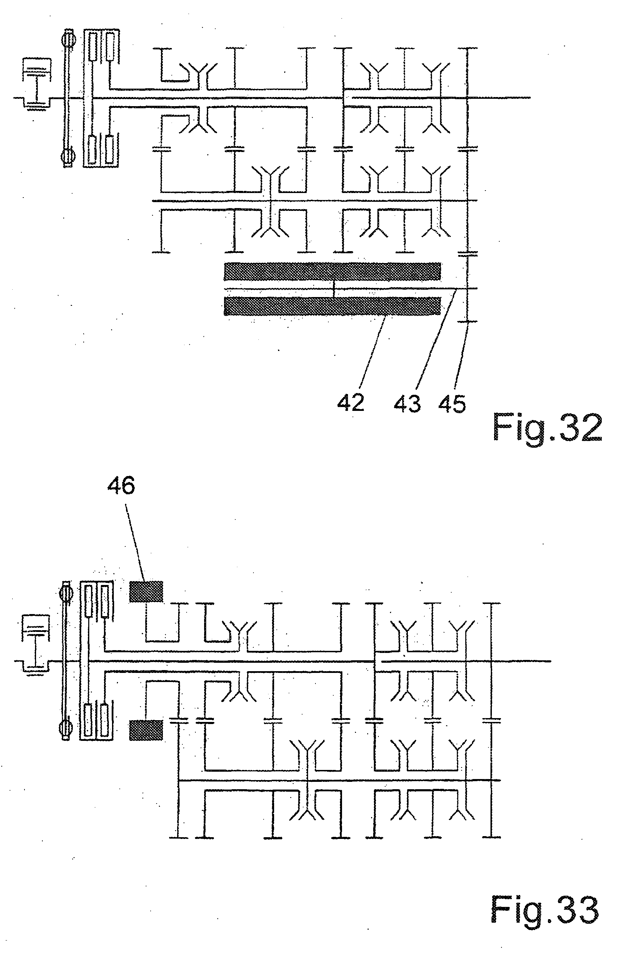

Fig. 32 zeigt die gleiche Anordnung, wobei die Elektromaschine 42 jedoch über eine zusätzliches Zahnrad 45, dass mit dem rechten Zahnrad 14 der Vorgelegewellenachse abtriebsseitig mit dem Getriebe verbunden ist. Die Fig. 33 zeigt noch eine Ausführungsform, bei der eine elektrische Maschine 46 der Doppelkupplung 16 koaxial nachgeschaltet, also auf der Abtriebsseite der Doppelkupplung 16 angeordnet ist.

### Bezugszeichen

- 1: Innere Getriebeeingangswelle /Hauptwelle
- 2: Vorgelegewelle/Nebenwelle
- 3: Zahnrad
- 4: Zahnrad
- 5: Zahnrad
- 6: Zahnrad
- 7: Zahnrad
- 8: Zahnrad
- 9: Zahnrad
- 10: Zahnrad
- 11: Zahnrad
- 12: Zahnrad
- 13: Zahnrad
- 14: Zahnrad
- 15: Getriebeausgangswelle/Abtriebswelle
- 16: Doppelkupplung
- 17: Schwingungsdämpfer
- 18: Verbrennungsmotor
- 19: Äußere Getriebeeingangswelle
- 20: Hohlwelle
- 21: Hohlwelle
- 22: Vorgelegewelle/Nebenwelle
- 23: Kopplungsmittel
- 24: Kopplungsmittel
- 25: Schiebemuffe
- 26: Hohlwelle
- 27: Hohlwelle
- 28: Hohlwelle
- 29: Kupplungskörper
- 30: Kupplungskörper
- 31: Kupplungskörper
- 32: Kupplungskörper
- 33: Synchronkörper
- 34: Synchronkörper
- 35: Synchronkörper
- 36: Synchronkörper
- 37: Hohlwelle
- 38: Lagerebene
- 39: Lagerebene
- 40: Lagerebene
- 41: Elektromaschine
- 42: Elektromaschine
- 43: Nebenwelle
- 44: Zahnrad
- 45: Zahnrad
- 46: Elektromaschine
- 47: Abtriebskonstante
- 48: Hohlwelle
- 49: Hohlwelle

- A: Schaltelement
- B: Schaltelement
- C: Schaltelement
- D: Schaltelement
- E: Schaltelement
- F: Schaltelement
- G: Schaltelement
- H: Schaltelement
- K0: Kupplung
- K1: Kupplung
- K2: Kupplung
- L1: Leistungsfluss
- L2: Leistungsfluss
- L3: Leistungsfluss
- L4: Leistungsfluss
- L5: Leistungsfluss
- L6: Leistungsfluss
- L7: Leistungsfluss
- L8: Leistungsfluss
- RG: Rückwärtsgang
- S1: Synchronisierung
- S2: Synchronisierung
- S3: Synchronisierung
- S4: Synchronisierung
- S3a: Halbsynchronisierung
- S3b: Halbsynchronisierung
- S4a: Halbsynchronisierung
- S4b: Halbsynchronisierung
- T1: Teilgetriebe
- T2: Teilgetriebe
- W1: Windungsgetriebe
- W2: Windungsgetriebe
- Z1: Zahnradebene
- Z2: Zahnradebene
- Z3: Zahnradebene
- Z4: Zahnradebene
- Z5: Zahnradebene
- Z6: Zahnradebene
- i: Übersetzung
- i_{ges}: Getriebespreizung
- ϕ: Stufensprung

## Patentansprüche

1. Doppelkupplungs-Windungsgetriebe, mit zwei Teilgetrieben (T1, T2) mit koaxial zueinander angeordneten Getriebeeingangswellen (1, 19), die mit jeweils einer Kupplung (K1, K2) verbunden sind, mit wenigstens einer Vorgelegewelle (2, 22) und mit einer koaxial zu den Getriebeeingangswellen (1, 19) angeordneten Getriebeausgangswelle (15), wobei sich der Leistungsfluss (L1 bis L8) wenigstens eines Ganges über mindestens zwei, durch miteinander kämmende Zahnräder (3 bis 14) gebildete Zahnradebenen (Z1 bis Z6) windet, und wobei beide Teilgetriebe (T1,T2) eine Vorgelegewelle (2,22) aufweisen and diese Vorgelegewellen eine Vorgelegeachse des Doppelkupplungs-Windungsgetriebes bilden, **dadurch gekennzeichnet, dass** die beiden Teilgetriebe (T1, T2) als zwei hintereinander angeordnete einzelne Windungsgetriebe (W1, W2) mit jeweils mindestens vier Vorwärtsgängen ausgebildet sind, wobei es in einem Windungsgetriebe (W1) zumindest einen Leistungsfluss (L4) gibt, der sich über eine erste Zahnradebene (Z1), eine zweite Zahnradebene (Z2), und eine dritte Zahnradebene (Z3) durch das Getriebe windet.

2. Doppelkupplungs-Windungsgetriebe nach Anspruch 1, **dadurch gekennzeichnet, dass** das erste Teilgetriebe (T1) als ein antriebsmotorseitig angeordnetes, einstufiges viergängiges Windungsgetriebe (W1) mit parallelem Antrieb und Abtrieb sowie das zweite, abtriebsseitig angeordnete Teilgetriebe (T2) als ein zweistufiges viergängiges Windungsgetriebe (W2) mit koaxialem Antrieb und Abtrieb ausgebildet ist.

3. Doppelkupplungs-Windungsgetriebe nach Anspruch 1 oder 2, **dadurch gekennzeichnet, dass** das erste, antriebsmotorseitig angeordnete Windungs-Teilgetriebe (T1) eine als mehrteilige Hohlwelle ausgebildete Getriebeeingangswelle (19, 20) aufweist, aus der eine als Zentralwelle ausgebildete Getriebeeingangswelle (1) des zweiten, abtriebsseitig angeordneten Windungs-Teilgetriebes (T2) heraustritt, und über eine als Abtriebswelle ausgebildete, eine mehrteilige Hohlwelle (21, 49) durchsetzende Vorgelegewelle (2) verfügt, und dass das zweite Windungs-Teilgetriebe (T2) eine mehrteilige Hohlwelle (26, 48) aufweist, die antriebsseitig mit der als Zentralwelle ausgebildeten Getriebeeingangswelle (1) verbunden ist und aus der abtriebsseitig eine Getriebeausgangswelle (15) heraustritt, und über eine eine mehrteilige Hohlwelle (27, 28) durchsetzende Vorgelegewelle (22) verfügt, die mit der Abtriebswelle (2) des ersten Teilgetriebes (T1) verbunden ist.

4. Doppelkupplungs-Windungsgetriebe nach zumindest einem der Ansprüche 1 bis 3, **dadurch gekennzeichnet, dass** das erste Windungs-Teilgetriebe (T1) drei der äußeren Getriebeeingangswelle (19, 20) zugeordnete Zahnräder (3, 4, 5) und drei der zugehörigen Vorgelegewelle (2) zugeordnete Zahnräder (6, 7, 8) aufweist, die drei Zahnradebenen (Z1, Z2, Z3) bilden, wobei auf der Antriebsseite und auf der Vorgelegeseite jeweils zwei der drei Zahnräder (4, 5, 6, 7) spiegelbildlich fest miteinander gekoppelt sind, und zwischen den beiden miteinander gekoppelten Zahnrädern (4, 5; 6, 7) und dem dritten Zahnrad (3, 8) jeweils ein Schaltpaket (A/B, C/D) angeordnet ist.

5. Doppelkupplungs-Windungsgetriebe nach zumindest einem der Ansprüche 1 bis 3, **dadurch gekennzeichnet, dass** das erste Windungs-Teilgetriebe (T1) drei der äußeren Getriebeeingangswelle (19) zugeordnete Zahnräder (3, 4, 5) und drei der zugehörigen Vorgelegewelle (2) zugeordnete Zahnräder (6, 7, 8) aufweist, die drei Zahnradebenen (Z1, Z2, Z3) bilden, wobei das rechte, doppelkupplungsferne Zahnrad (8) auf der Vorgelegewelle (2) als ein Festrad ausgebildet ist und zwischen den Zahnrädern (3, 4, 5, 6, 7, 8) jeweils ein Schaltelement (A, B, C, D) angeordnet ist.

6. Doppelkupplungs-Windungsgetriebe nach zumindest einem der Ansprüche 1 bis 5, **dadurch gekennzeichnet, dass** das zweite Windungs-Teilgetriebe (T2) drei obere Zahnräder (9, 10, 11) aufweist, wobei ein linkes, doppelkupplungsnahes Zahnrad (9) mit der inneren Getriebeeingangswelle (1) drehfest verbunden ist, ein mittleres Zahnrad (10) als Losrad ausgebildet ist und ein rechtes, doppelkupplungsfernes Zahnrad (11) mit der Getriebeausgangswelle (15) drehfest verbunden ist, und das zweite Windungs-Teilgetriebe (T2) drei untere Zahnräder (12, 13, 14) aufweist, wobei das linke, doppelkupplungsnahe Zahnrad (12) und das mittlere Zahnrad (13) als Losräder ausgebildet sind sowie das rechte, doppelkupplungsferne Zahnrad (14) als ein Festrad ausgebildet ist, und dass die miteinander kämmenden gegenüberliegenden Zahnräder (9, 12; 10, 13; 11, 14) drei Zahnradebenen (Z4, Z5, Z6) bilden, wobei zwischen den Zahnrädern (9, 10, 11, 12, 13, 14) Schaltelemente (E, F, G, H) angeordnet sind.

7. Doppelkupplungs-Windungsgetriebe nach zumindest einem der Ansprüche 1 bis 6, **dadurch gekennzeichnet, dass** ein auf der Getriebeausgangswelle (15) angeordnetes Festrad (11), das mit einem auf der mit der Abtriebswelle (2) des ersten Windungs-Teilgetriebes (T1) verbundenen zugehörigen Vorgelegewelle (22) angeordneten Festrad (14) im Zahneingriff ist, als eine ausgangsseitige konstante Übersetzungsstufe (47) wirksam ist.

8. Doppelkupplungs-Windungsgetriebe nach zumindest einem der Ansprüche 1 bis 7, **dadurch gekennzeichnet, dass** den Gängen beidseitig und/oder einseitig wirksame Synchronisierungen (S1, S2, S3, S4, S3a, S3b, S4a, S4b) zugeordnet sind.

9. Doppelkupplungs-Windungsgetriebe nach zumindest einem der Ansprüche 1 bis 8, **dadurch gekennzeichnet, dass** den Gängen des antriebsmotorseitigen Windungs-Teilgetriebes (T1) als Schaltpakete (A/B, C/D) oder als Einzel-Schaltelemente (A, B, C, D) ausgebildete Schaltkupplungen, und den Gängen des abtriebsseitigen Windungs-Teilgetriebes (T2) als Einzel-Schaltelemente (E, F, G, H) ausgebildete Schaltkupplungen zugeordnet sind.

10. Doppelkupplungs-Windungsgetriebe nach zumindest einem der Ansprüche 1 bis 9, **dadurch gekennzeichnet, dass** auf die Schaltkupplungen wirksame Kopplungsmittel (23, 24) vorgesehen sind, die ein gleichzeitiges Schalten von auf den Getriebeeingangswellen (1, 19, 20) und der Getriebeausgangswelle (15) den Vorgelegewellen (2, 22) gegenüberliegend angeordneten Einzel-Schaltelementen (A, B, C, D, E, F, G, H) verhindern.

11. Doppelkupplungs-Windungsgetriebe nach Anspruch 10, **dadurch gekennzeichnet, dass** ein erstes Kupplungsmittel (23) als eine transversal verschiebbare mechanische Verbindung zwischen den axial gleichen Außenseiten von Schiebemuffen bzw. Synchronschiebemuffen (25) der gegenüber liegenden Schaltkupplungen ausgebildet ist.

12. Doppelkupplungs-Windungsgetriebe nach Anspruch 10, **dadurch gekennzeichnet, dass** ein zweites Kopplungsmittel (24) als eine um seine Querachse drehbare mechanische Verbindung zwischen den axial entgegengesetzten Außenseiten von Schiebemuffen bzw. Synchronschiebemuffen (25) der gegenüberliegenden Schaltkupplungen ausgebildet ist.

13. Doppelkupplungs-Windungsgetriebe nach zumindest einem der Ansprüche 1 bis 12, **dadurch gekennzeichnet, dass** ein beliebig vorgebbarer Gang des abtriebsseitigen Teilgetriebes (T2) als ein Direktgang ausgebildet ist.

14. Doppelkupplungs-Windungsgetriebe nach zumindest einem der Ansprüche 1 bis 13, **dadurch gekennzeichnet, dass** den Getriebeeingangswellen (1, 19) wahlweise die Ganggruppen mit den ungeraden Gängen oder den geraden Gängen zugeordnet sind.

15. Doppelkupplungs-Windungsgetriebe nach zumindest einem der Ansprüche 1 bis 14, **dadurch gekennzeichnet, dass** wenigstens ein Zahnradsatz eines Rückwärtsganges (RG) wahlweise in dem ersten oder dem zweiten Teilgetriebe (T1, T2) angeordnet ist, wobei der Zahnradsatz des Rückwärtsganges (RG) zwischen zwei beliebig vorgebbaren Zahnradebenen (Z1 bis Z6) positionierbar ist.

16. Doppelkupplungs-Windungsgetriebe nach zumindest einem der Ansprüche 1 bis 15, **dadurch gekennzeichnet, dass** wenigstens zwei Rückwärtsgänge vorgesehen sind.

17. Doppelkupplungs-Windungsgetriebe nach zumindest einem der Ansprüche 1 bis 16, **dadurch gekennzeichnet, dass** wenigstens ein Rückwärtsgang mit Hilfe eines zusätzlichen, drehrichtungsumkehrenden Planetensatzes realisiert ist.

18. Doppelkupplungs-Windungsgetriebe nach zumindest einem der Ansprüche 1 bis 17, **dadurch gekennzeichnet, dass** wenigstens ein Rückwärtsgang durch eine elektrische Maschine antreibbar ist.

19. Doppelkupplungs-Windungsgetriebe nach zumindest einem der Ansprüche 1 bis 18, **dadurch gekennzeichnet, dass** dem wenigstens einen Rückwärtsgang (RG) eine zusätzliche oder eine vorhandene Synchronisierung zugeordnet ist.

20. Doppelkupplungs-Windungsgetriebe nach zumindest einem der Ansprüche 1 bis 19, **dadurch gekennzeichnet, dass** zwei axial äußere und wenigstens eine axial innere Lagerebene (38, 39, 40) vorgesehen sind, wobei die beiden axial äußeren Lagerebenen (38, 40) in eine vordere und eine hintere Gehäusewand eines Getriebegehäuses integriert sind, und die axial innere Lagerebene (39) zwischen den beiden Teilgetrieben (T1, T2) angeordnet ist.

21. Doppelkupplungs-Windungsgetriebe nach Anspruch 20, **dadurch gekennzeichnet, dass** die axial innere Lagerebene (39) in das Gehäuse integriert ist.

22. Doppelkupplungs-Windungsgetriebe nach Anspruch 20, **dadurch gekennzeichnet, dass** die axial innere Lagerebene (39) als ein eigenständiges Bauteil ausgebildet ist.

23. Doppelkupplungs-Windungsgetriebe nach zumindest einem der Ansprüche 20 bis 22, **dadurch gekennzeichnet, dass** eine weitere axial innere Lagerebene vorgesehen ist, die zwischen einer fünften und einer sechsten Zahnradebene (Z5, Z6) angeordnet ist.

24. Doppelkupplungs-Windungsgetriebe nach zumindest einem der Ansprüche 1 bis 24, **dadurch gekennzeichnet, dass** eine Anbindung an eine einem Hybridantrieb zugehörige elektrische Maschine (41, 42, 46) vorgesehen ist.

25. Doppelkupplungs-Windungsgetriebe nach Anspruch 24, **dadurch gekennzeichnet, dass** die elektrische Maschine (46) der Doppelkupplung (16) koaxial nachgeschaltet bzw. antriebstechnisch nachgeordnet ist.

26. Doppelkupplungs-Windungsgetriebe nach Anspruch 24, **dadurch gekennzeichnet, dass** die elektrische Maschine (41) zwischen einer antriebsseitigen zusätzlichen Kupplung (K0) und der Doppelkupplung (16) angeordnet ist.

27. Doppelkupplungs-Windungsgetriebe nach Anspruch 24, **dadurch gekennzeichnet, dass** die elektrische Maschine (42) antriebsseitig oder abtriebsseitig auf einer zusätzlichen Vorgelegewelle (43) angeordnet und mit dem linken, doppelkupplungsnahen oder dem rechten, doppelkupplungsfernen Windungs-Teilgetriebe (T1, T2) verbunden ist.

28. Doppelkupplungs-Windungsgetriebe nach zumindest einem der Ansprüche 1 bis 27, **dadurch gekennzeichnet, dass** der Doppelkupplung (16) ein Schwingungsdämpfer (17) vorgeschaltet ist.

29. Doppelkupplungs-Windungsgetriebe nach Anspruch 28, **dadurch gekennzeichnet, dass** der Schwingungsdämpfer (17) als ein Torsionsschwingungsdämpfer, ein Zwei-Massen-Schwungrad oder ein hydraulisch wirksamer Dämpfer ausgebildet ist.

30. Doppelkupplungs-Windungsgetriebe nach zumindest einem der Ansprüche 1 bis 29, **dadurch gekennzeichnet, dass** die Doppelkupplung (16) wahlweise als eine Nass- oder Trockenkupplung ausgebildet ist.

## Claims

1. Double clutch winding transmission having two component transmissions (T1, T2) with transmission input shafts (1, 19) which are arranged coaxially with respect to one another and are connected to in each case one clutch (K1, K2), having at least one countershaft (2, 22) and having a transmission output shaft (15) which is arranged coaxially with respect to the transmission input shafts (1, 19), with the power flow (L1 to L8) of at least one gear winding via at least two gearwheel planes (Z1 to Z6) formed by intermeshing gearwheels (3 to 14), and with both component transmissions (T1, T2) having a countershaft (2, 22) and said countershafts forming a countershaft axis of the double clutch winding transmission, **characterized in that** the two component transmissions (T1, T2) are formed as two individual winding transmissions (W1, W2) which are arranged in series and which have in each case at least four forward gears, wherein in one winding transmission (W1) there is at least one power flow (L4) which winds through the transmission via a first gearwheel plane (Z1), a second gearwheel plane (Z2) and a third gearwheel plane (Z3).

2. Double clutch winding transmission according to Claim 1, **characterized in that** the first component transmission (T1) is designed as a single-stage, four-gear winding transmission (W1) which is arranged at the drive engine side and has a parallel drive input and drive output, and the second component transmission (T2) arranged at the drive output side is designed as a two-stage, four-gear winding transmission (W2) with a coaxial drive input and drive output.

3. Double clutch winding transmission according to Claim 1 or 2, **characterized in that** the first winding component transmission (T1) arranged at the drive engine side has a transmission input shaft (19, 20) designed as a multi-part hollow shaft, out of which emerges a transmission input shaft (1), which is designed as a central shaft, of the second winding component transmission (T2) arranged at the drive output side, and said first winding component transmission (T1) has a countershaft (2) which is designed as a drive output shaft and which extends through a multi-part hollow shaft (21, 49), and **in that** the second winding component transmission (T2) has a multi-part hollow shaft (26, 48) which is connected at the drive input side to the transmission input shaft (1) designed as a central shaft, and out of which emerges at the drive output side a transmission output shaft (15), and said second winding component transmission (T2) has a countershaft (22) which extends through a multi-part hollow shaft (27, 28) and which is connected to the drive output shaft (2) of the first component transmission (T1).

4. Double clutch winding transmission according to at least one of Claims 1 to 3, **characterized in that** the first winding component transmission (T1) has three gearwheels (3, 4, 5) assigned to the outer transmission input shaft (19, 20) and three gearwheels (6, 7, 8) assigned to the associated countershaft (2), which gearwheels form three gearwheel planes (Z1, Z2, Z3), wherein on the drive input side and on the countershaft side, in each case two of the three gearwheels (4, 5, 6, 7) are fixedly coupled to one another mirror-symmetrically, and in each case one shift pack (A/B, C/D) is arranged between the two gearwheels (4, 5; 6, 7) coupled to one another and the third gearwheel (3, 8).

5. Double clutch winding transmission according to at least one of Claims 1 to 3, **characterized in that** the first winding component transmission (T1) has three gearwheels (3, 4, 5) assigned to the outer transmission input shaft (19) and three gearwheels (6, 7, 8) assigned to the associated countershaft (2), which gearwheels form three gearwheel planes (Z1, Z2, Z3), with the right-hand gearwheel (8), which is remote from the double clutch, on the countershaft (2) being designed as a fixed gear and with in each case one shift element (A, B, C, D) being arranged between the gearwheels (3, 4, 5, 6, 7, 8).

6. Double clutch winding transmission according to at least one of Claims 1 to 5, **characterized in that** the second winding component transmission (T2) has three upper gearwheels (9, 10, 11), with a left-hand gearwheel (9), which is close to the double clutch, being connected to the inner transmission input shaft (1) for conjoint rotation therewith, with a central gearwheel (10) being designed as a loose gear and with a right-hand gearwheel (11), which is remote from the double clutch, being connected to the transmission output shaft (15) for conjoint rotation therewith, and with the second winding component transmission (T2) having three lower gearwheels (12, 13, 14), with the left-hand gearwheel (12), which is close to the double clutch, and the central gearwheel (13) being designed as loose gears, and with the right-hand gearwheel (14), which is remote from the double clutch, being designed as a fixed gear, and **in that** the opposite gearwheels (9, 12; 10, 13; 11, 14) which mesh with one another form three gearwheel planes (Z4, Z5, Z6), with shift elements (E, F, G, H) being arranged between the gearwheels (9, 10, 11, 12, 13, 14).

7. Double clutch winding transmission according to at least one of Claims 1 to 6, **characterized in that** a fixed gear (11) which is arranged on the transmission output shaft (15) and which is in meshing engagement with a fixed gear (14) arranged on the associated countershaft (22) connected to the drive output shaft (2) of the first winding component transmission (T1) acts as an output-side constant transmission ratio stage (47).

8. Double clutch winding transmission according to at least one of Claims 1 to 7, **characterized in that** bidirectionally and/or unidirectionally acting synchronizing devices (S1, S2, S3, S4, S3a, S3b, S4a, S4b) are assigned to the gears.

9. Double clutch winding transmission according to at least one of Claims 1 to 8, **characterized in that** the gears of the winding component transmission (T1) at the drive engine side are assigned shift clutches designed as shift packs (A/B, C/D) or as individual shift elements (A, B, C, D), and the gears of the drive-output-side winding component transmission (T2) are assigned shift clutches designed as individual shift elements (E, F, G, H).

10. Double clutch winding transmission according to at least one of Claims 1 to 9, **characterized in that** coupling means (23, 24) are provided which act on the shift clutches and which prevent a simultaneous engagement of individual shift elements (A, B, C, D, E, F, G, H) arranged on the transmission input shafts (1, 19, 20) and on the transmission output shaft (15) opposite the countershafts (2, 22).

11. Double clutch winding transmission according to Claim 10, **characterized in that** a first coupling means (23) is designed as a transversely movable mechanical connection between the axially identical outer sides of sliding sleeves or synchronizing sliding sleeves (25) of the opposite shift clutches.

12. Double clutch winding transmission according to Claim 10, **characterized in that** a second coupling means (24) is designed as a mechanical connection, rotatable about its transverse axis, between the axially opposite outer sides of sliding sleeves or synchronizing sliding sleeves (25) of the opposite shift clutches.

13. Double clutch winding transmission according to at least one of Claims 1 to 12, **characterized in that** an arbitrarily predefinable gear of the drive-output-side component transmission (T2) is designed as a direct gear.

14. Double clutch winding transmission according to at least one of Claims 1 to 13, **characterized in that** the transmission input shafts (1, 19) are assigned selectively the gear groups with the odd-numbered gears or the even-numbered gears.

15. Double clutch winding transmission according to at least one of Claims 1 to 14, **characterized in that** at least one gearwheel set of a reverse gear (RG) is arranged optionally in the first or the second component transmission (T1, T2), it being possible for the gearwheel set of the reverse gear (RG) to be positioned between two arbitrarily predefinable gearwheel planes (Z1 to Z6).

16. Double clutch winding transmission according to at least one of Claims 1 to 15, **characterized in that** at least two reverse gears are provided.

17. Double clutch winding transmission according to at least one of Claims 1 to 16, **characterized in that** at least one reverse gear is realized by means of an additional, rotational-direction-reversing planetary gear set.

18. Double clutch winding transmission according to at least one of Claims 1 to 17, **characterized in that** at least one reverse gear can be driven by an electric machine.

19. Double clutch winding transmission according to at least one of Claims 1 to 18, **characterized in that** the at least one reverse gear (RG) is assigned an additional or an existing synchronizing device.

20. Double clutch winding transmission according to at least one of Claims 1 to 19, **characterized in that** two axially outer and at least one axially inner bearing planes are provided (38, 39, 40), with the two axially outer bearing planes (38, 40) being integrated into a front and a rear housing wall of a transmission housing, and with the axially inner bearing plane (39) being arranged between the two component transmissions (T1, T2).

21. Double clutch winding transmission according to Claim 20, **characterized in that** the axially inner bearing plane (39) is integrated into the housing.

22. Double clutch winding transmission according to Claim 20, **characterized in that** the axially inner bearing plane (39) is formed as a separate component.

23. Double clutch winding transmission according to at least one of Claims 20 to 22, **characterized in that** a further axially inner bearing plane is provided which is arranged between a fifth and a sixth gearwheel plane (Z5, Z6).

24. Double clutch winding transmission according to at least one of Claims 1 to 24, **characterized in that** a connection is provided to an electric machine (41, 42, 46) belonging to a hybrid drive.

25. Double clutch winding transmission according to Claim 24, **characterized in that** the electric machine (46) is connected coaxially downstream, or positioned downstream in terms of drive, of the double clutch (16).

26. Double clutch winding transmission according to Claim 24, **characterized in that** the electric machine (41) is arranged between a drive-input-side additional clutch (K0) and the double clutch (16).

27. Double clutch winding transmission according to Claim 24, **characterized in that** the electric machine (42) is arranged at the drive input side or drive output side on an additional countershaft (43), and is connected to the left-hand winding component transmission (T1) close to the double clutch or to the right-hand winding component transmission (T2) remote from the double clutch.

28. Double clutch winding transmission according to at least one of Claims 1 to 27, **characterized in that** a vibration damper (17) is connected upstream of the double clutch (16).

29. Double clutch winding transmission according to Claim 28, **characterized in that** the vibration damper (17) is designed as a torsional vibration damper, a dual-mass flywheel or a hydraulically acting damper.

30. Double clutch winding transmission according to at least one of Claims 1 to 29, **characterized in that** the double clutch (16) is designed optionally as a wet-running or dry-running clutch.

## Revendications

1. Boîte de transmission à enroulement à double embrayage, comprenant deux boîte de transmission partielles (T1, T2) avec des arbres d'entrée de boîte de transmission (1, 19) disposés coaxialement l'un à l'autre, qui sont connectés à chaque fois par un embrayage (K1, K2), au moins un arbre intermédiaire (2, 22) et un arbre de sortie de boîte de transmission (15) disposé coaxialement aux arbres d'entrée de boîte de transmission (1, 19), le flux de puissance (L1 à L8) d'au moins un rapport s'enroulant sur au moins deux plans de roues dentées (Z1 à Z6) formés par des roues dentées s'engrenant les unes dans les autres (3 à 14), et les deux boîtes de transmission partielles (T1, T2) présentant un arbre intermédiaire (2, 22) et ces arbres intermédiaires formant un axe intermédiaire de la boîte de transmission à enroulement à double embrayage, **caractérisée en ce que** les deux boîte de transmission partielles (T1, T2) sont réalisées sous forme de deux boîtes de transmission à enroulement individuelles (W1, W2) disposées l'une derrière l'autre, avec à chaque fois au moins quatre rapports de marche avant, au moins un flux de puissance (L4) existant dans une boîte de transmission à enroulement (W1), lequel s'enroule sur un premier plan de roue dentée (Z1), un deuxième plan de roue dentée (Z2), et un troisième plan de roue dentée (Z3) à travers la boîte de transmission.

2. Boîte de transmission à enroulement à double embrayage selon la revendication 1, **caractérisée en ce que** la première boîte de transmission partielle (T1) est réalisée sous forme de boîte de transmission à enroulement (W1) à quatre rapports et un étage, disposée du côté du moteur d'entraînement, avec un entraînement et une prise de force parallèles, et la deuxième boîte de transmission partielle (T2), disposée du côté de la prise de force, est réalisée sous forme d'une boîte de transmission à enroulement (W2) à quatre rapports à deux étages avec un entraînement et une prise de force coaxiaux.

3. Boîte de transmission à enroulement à double embrayage selon la revendication 1 ou 2, **caractérisée en ce que** la première boîte de transmission à enroulement (T1) disposée du côté du moteur d'entraînement présente un arbre d'entrée de boîte de transmission (19, 20) réalisé sous forme d'arbre creux en plusieurs parties, hors duquel sort un arbre d'entrée de boîte de transmission (1) réalisé sous forme d'arbre central, de la deuxième boîte de transmission partielle à enroulement (T2) disposée du côté de la prise de force, et dispose d'un arbre intermédiaire (2) réalisé sous forme d'arbre de prise de force, traversant un arbre creux en plusieurs parties (21, 49), et **en ce que** la deuxième boîte de transmission partielle à enroulement (T2) présente un arbre creux en plusieurs parties (26, 48), qui est connecté du côté de l'entraînement à l'arbre d'entrée de boîte de vitesses (1) réalisé sous forme d'arbre central et hors duquel sort un arbre de sortie de boîte de transmission (15) du côté de la prise de force, et dispose d'un arbre intermédiaire (22) traversant un arbre creux en plusieurs parties (27, 28), qui est connecté à l'arbre de prise de force (2) de la première boîte de transmission partielle (T1).

4. Boîte de transmission à enroulement à double embrayage selon au moins l'une quelconque des revendications 1 à 3, **caractérisée en ce que** la première boîte de transmission partielle à enroulement (T1) présente trois roues dentées (3, 4, 5) associées à l'arbre d'entrée de boîte de transmission extérieur (19, 20), et trois roues dentées (6, 7, 8) associées à l'arbre intermédiaire associé (2), lesquelles forment trois plans de roues dentées (Z1, Z2, Z3), à chaque fois deux des trois roues dentées (4, 5, 6, 7) étant accouplées fixement symétriquement l'une à l'autre du côté de l'entraînement et du côté intermédiaire, et un paquet de commutation (A/B, C/D) étant à chaque fois disposé entre les deux roues dentées accouplées l'une à l'autre (4, 5 ; 6, 7) et la troisième roue dentée (3, 8).

5. Boîte de transmission à enroulement à double embrayage selon au moins l'une quelconque des revendications 1 à 3, **caractérisée en ce que** la première boîte de transmission partielle à enroulement (T1) présente trois roues dentées (3, 4, 5) associées à l'arbre d'entrée de boîte de transmission extérieur (19), et trois roues dentées (6, 7, 8) associées à l'arbre intermédiaire associé (2), lesquelles forment trois plans de roues dentées (Z1, Z2, Z3), la roue dentée de droite (8), éloignée du double embrayage, étant réalisée sur l'arbre intermédiaire (2) en tant que roue fixe, et à chaque fois un élément de commutation (A, B, C, D) étant disposé entre les roues dentées (3, 4, 5, 6, 7, 8).

6. Boîte de transmission à enroulement à double embrayage selon au moins l'une quelconque des revendications 1 à 5, **caractérisée en ce que** la deuxième boîte de transmission partielle à enroulement (T2) présente trois roues dentées supérieures (9, 10, 11), une roue dentée de gauche (9), proche du double embrayage, étant connectée de manière solidaire en rotation à l'arbre d'entrée de boîte de transmission (1), une roue dentée centrale (10) étant réalisée sous forme de roue libre et une roue dentée de droite (11), éloignée du double embrayage, étant connectée de manière solidaire en rotation à l'arbre de sortie de boîte de transmission (15), et la deuxième boîte de transmission partielle à enroulement (T2) présente trois roues dentées inférieures (12, 13, 14), la roue dentée de gauche (12), proche du double embrayage, et la roue dentée centrale (13) étant réalisées sous forme de roues libres, et la roue dentée de droite (14), éloignée du double embrayage, étant réalisée sous forme de roue fixe, et **en ce que** les roues dentées opposées (9, 12 ; 10, 13 ; 11, 14) s'engrenant les unes dans les autres formant trois plans de roues dentées (Z4, Z5, Z6), des éléments de commutation (E, F, G, H) étant disposés entre les roues dentées (9, 10, 11, 12, 13, 14).

7. Boîte de transmission à enroulement à double embrayage selon au moins l'une quelconque des revendications 1 à 6, **caractérisée en ce qu'**une roue fixe (11) disposée sur l'arbre de sortie de boîte de transmission (15), qui est en prise dentée sur une roue fixe (14) disposée sur l'arbre intermédiaire (22) associé connecté à l'arbre de prise de force (2) de la première boîte de transmission partielle à enroulement (T1), agit en tant qu'étage de multiplication constant (47) du côté de la sortie.

8. Boîte de transmission à enroulement à double embrayage selon au moins l'une quelconque des revendications 1 à 7, **caractérisée en ce que** des synchronisations (S1, S2, S3, S4, S3a, S3b, S4a, S4b) agissant des deux côtés et/ou d'un seul côté sont associées aux rapports.

9. Boîte de transmission à enroulement à double embrayage selon au moins l'une quelconque des revendications 1 à 8, **caractérisée en ce que** des embrayages de commutation réalisés en tant que paquets de commutation (A/B, C/D) ou en tant qu'éléments de commutation individuels (A, B, C, D) sont associés aux rapports de la boîte de transmission partielle à enroulement (T1) du côté du moteur d'entraînement, et des embrayages de commutation réalisés sous forme d'éléments de commutation individuels (E, F, G, H) sont associés aux rapports de la boîte de transmission partielle à enroulement (T2) du côté de la prise de force.

10. Boîte de transmission à enroulement à double embrayage selon au moins l'une quelconque des revendications 1 à 9, **caractérisée en ce que** des moyens d'accouplement (23, 24) agissant sur les embrayages de commutation sont prévus, lesquels empêchent une commutation simultanée d'éléments de commutation individuels (A, B, C, D, E, F, G, H) disposés en regard des arbres intermédiaires (2, 22) sur les arbres d'entrée de boîte de transmission (1, 19, 20) et l'arbre de sortie de boîte de transmission (15).

11. Boîte de transmission à enroulement à double embrayage selon la revendication 10, **caractérisée en ce qu'**un premier moyen d'accouplement (23) est réalisé sous forme d'assemblage mécanique déplaçable transversalement entre les côtés extérieurs axialement identiques de manchons coulissants ou de manchons coulissants synchrones (25) des embrayages de commutation opposés.

12. Boîte de transmission à enroulement à double embrayage selon la revendication 10, **caractérisée en ce qu'**un deuxième moyen d'accouplement (24) est réalisé sous forme d'assemblage mécanique pouvant tourner autour de son axe transversal entre les côtés extérieurs axialement opposés de manchons coulissants ou de manchons coulissants synchrones (25) des embrayages de commutation opposés.

13. Boîte de transmission à enroulement à double embrayage selon au moins l'une quelconque des revendications 1 à 12, **caractérisée en ce qu'**un rapport prédéfinissable de manière quelconque de la boîte de transmission partielle (T2) du côté de la prise de force est réalisé sous forme de rapport direct.

14. Boîte de transmission à enroulement à double embrayage selon au moins l'une quelconque des revendications 1 à 13, **caractérisée en ce que** de manière sélective les groupes de rapports avec les rapports impairs ou les rapports pairs sont associés aux arbres d'entrée de boîte de transmission (1, 19).

15. Boîte de transmission à enroulement à double embrayage selon au moins l'une quelconque des revendications 1 à 14, **caractérisée en ce qu'**au moins un jeu de roues dentées d'un rapport de marche arrière (RG) est disposé de manière sélective dans la première ou dans la deuxième boîte de transmission partielle (T1, T2), le jeu de roues dentées du rapport de marche arrière (RG) pouvant être positionné entre deux plans de roues dentées prédéfinissables de manière quelconque (Z1 à Z6).

16. Boîte de transmission à enroulement à double embrayage selon au moins l'une quelconque des revendications 1 à 15, **caractérisée en ce qu'**au moins deux rapports de marche arrière sont prévus.

17. Boîte de transmission à enroulement à double embrayage selon au moins l'une quelconque des revendications 1 à 16, **caractérisée en ce qu'**au moins un rapport de marche arrière est réalisé à l'aide d'un train planétaire supplémentaire inversant le sens de rotation.

18. Boîte de transmission à enroulement à double embrayage selon au moins l'une quelconque des revendications 1 à 17, **caractérisée en ce qu'**au moins un rapport de marche arrière peut être entraîné par une machine électrique.

19. Boîte de transmission à enroulement à double embrayage selon au moins l'une quelconque des revendications 1 à 18, **caractérisée en ce que** l'on associe à l'au moins un rapport de marche arrière (RG) une synchronisation supplémentaire ou existante.

20. Boîte de transmission à enroulement à double embrayage selon au moins l'une quelconque des revendications 1 à 19, **caractérisée en ce que** deux plans de palier axialement extérieurs et au moins un plan de palier axialement intérieur (38, 39, 40) sont prévus, les deux plans de palier axialement extérieurs (38, 40) étant intégrés dans une paroi avant et une paroi arrière d'un carter de la boîte de transmission, et le plan de palier axialement intérieur (39) étant disposé entre les deux boîtes de transmission partielles (T1, T2).

21. Boîte de transmission à enroulement à double embrayage selon la revendication 20, **caractérisée en ce que** le plan de palier axialement intérieur (39) est intégré dans le carter.

22. Boîte de transmission à enroulement à double embrayage selon la revendication 20, **caractérisée en ce que** le plan de palier axialement intérieur (39) est réalisé sous forme de composant autonome.

23. Boîte de transmission à enroulement à double embrayage selon au moins l'une quelconque des revendications 20 à 22, **caractérisée en ce que** l'on prévoit un autre plan de palier axialement intérieur, lequel est disposé entre un cinquième et un sixième plan de roue dentée (Z5, Z6).

24. Boîte de transmission à enroulement à double embrayage selon au moins l'une quelconque des revendications 1 à 24, **caractérisée en ce qu'**il est prévu une liaison à une machine électrique (41, 42, 46) appartenant à un entraînement hybride.

25. Boîte de transmission à enroulement à double embrayage selon la revendication 24, **caractérisée en ce que** la machine électrique (46) du double embrayage (16) est montée coaxialement en aval, ou est disposée en aval du point de vue de la technique d'entraînement.

26. Boîte de transmission à enroulement à double embrayage selon la revendication 24, **caractérisée en ce que** la machine électrique (41) est disposée entre un embrayage supplémentaire (K0) du côté de l'entraînement et le double embrayage (16).

27. Boîte de transmission à enroulement à double embrayage selon la revendication 24, **caractérisée en ce que** la machine électrique (42) est disposée du côté de l'entraînement ou de la prise de force sur un arbre intermédiaire supplémentaire (43) et est connectée à la boîte de transmission partielle à enroulement de gauche, proche du double embrayage, ou à la boîte de transmission partielle à enroulement de droite, éloignée du double embrayage (T1, T2).

28. Boîte de transmission à enroulement à double embrayage selon au moins l'une quelconque des revendications 1 à 27, **caractérisée en ce que** le double embrayage (16) est précédé d'un amortisseur de vibrations (17).

29. Boîte de transmission à enroulement à double embrayage selon la revendication 28, **caractérisée en ce que** l'amortisseur de vibrations (17) est réalisé sous forme d'amortisseur de vibrations de torsion, de roue volante à deux masses, ou d'amortisseur à commande hydraulique.

30. Boîte de transmission à enroulement à double embrayage selon au moins l'une quelconque des revendications 1 à 29, **caractérisée en ce que** le double embrayage (16) est réalisé de manière sélective sous forme d'embrayage humide ou d'embrayage sec.
